# EUROPÄISCHE PATENTSCHRIFT

(11) **EP 3 906 120 B1**
(45) Veröffentlichungstag und Bekanntmachung des Hinweises auf die Patenterteilung: **12.03.2025**
(21) Anmeldenummer: 19835389.8
(22) Anmeldetag: 19.12.2019
(51) Int. Cl.: B65G 53/40, F04F 5/14, F04F 5/44, F04F 5/52, F04F 5/54, B05B 7/14, B05B 5/16

(54) **PULVERDÜNNSTROMPUMPE**
DILUTE PHASE POWDER PUMP
POMPE À FLUX CLAIR DE REFOULEMENT DE POUDRE

(30) Priorität: 31.12.2018 DE 102018133713
(43) Veröffentlichungstag der Anmeldung: 10.11.2021
(73) Patentinhaber: Gema Switzerland GmbH, 9200 Gossau (CH)
(72) Erfinder: TOBLER, Roger, 9100 Herisau (CH); SANWALD, Marco, 9030 Abtwil (CH); MAUCHLE, Felix, 9030 Abtwil (CH)
(74) Vertreter: Meissner Bolte Partnerschaft mbB
(86) Internationale Anmeldenummer: PCT/EP2019/086405
(87) Internationale Veröffentlichungsnummer: WO 2020/141090

(56) Entgegenhaltungen:
- EP-A2- 0 423 850
- DE-A1- 102014 105 044
- DE-A1- 102017 103 316
- DE-A1- 4 405 640

## Beschreibung

Die Erfindung betrifft eine Pulverdünnstrompumpe zum Fördern von Beschichtungspulver von einem Pulverreservoir zu einer Pulversprühvorrichtung, wobei die Pulverdünnstrompumpe einen Pulvereinlass, welcher strömungsmäßig mit dem Pulverreservoir verbunden oder verbindbar ist, und einen Pulverauslass aufweist, welcher strömungsmäßig mit der Pulversprühvorrichtung verbunden oder verbindbar ist, und wobei die Pulverdünnstrompumpe einen Pulverförderinjektor mit einer Treibdüse und einer Fangdüse aufweist.

Aus der Pulverbeschichtungstechnik ist es allgemein bekannt, zur Förderung von Beschichtungspulver Pulverförderinjektoren zu verwenden, welche unter Ausnutzung des sogenannten Venturi-Effekts mit Hilfe von Förderluft insbesondere fluidisiertes Beschichtungspulver aus einem Pulverreservoir (Pulvervorratsbehälter) fördern und durch die Fangdüse hindurch über beispielsweise einen Pulverzuführschlauch einer Pulversprühvorrichtung beispielsweise in Gestalt einer Beschichtungspistole zuzuleiten. Die in der Regel als länglicher Hohlkörper ausgeführte Fangdüse bildet dafür in ihrem Inneren einen sogenannten Strahlfangkanal aus, in welchen das zu fördernde Pulver-Luft-Gemisch eingeleitet wird.

Dem Strahlfangkanal der Fangdüse liegt stromaufwärts in Axialrichtung eine Treib- oder Förderstrahldüse gegenüber, durch welche hindurch Treib- oder Förderluft in die Fangdüse gepresst wird. Bedingt durch den verhältnismäßig kleinen Durchmesser der Treib- bzw. Förderstrahldüse bildet sich ein Luftstrom hoher Geschwindigkeit aus, wodurch sich in einem unmittelbar angrenzenden Pulverzuführkanal, welcher mit dem Pulverreservoir strömungsmäßig in Verbindung steht, ein Unterdruck ausbildet. Aufgrund des Unterdrucks wird das in der Regel fluidisierte Beschichtungspulver aus dem Pulverreservoir (Pulvervorratsbehälter) dem Pulverzuführkanal in Richtung der Fangdüse gefordert und durch diese hindurch dem Pulverzuführschlauch zugeleitet.

Ein Pulverförderinjektor dieser Art mit einer entsprechenden Venturi-Düsenanordnung ist beispielsweise aus der deutschen Offenlegungsschrift DE 198 24 802 A1 bekannt. Weitere bekannte Pulverförderinjektoren sind in DE 44 05 640 A1 und EP 0 423 850 A2 beschrieben.

Aus dem Stand der Technik bekannte Pulverförderinjektoren haben den Nachteil, dass der Luftstrom und die Pulverpartikel die Treibdüse und die Fangdüse und insbesondere den Strahlfangkanal der Fangdüse abnutzen. Bedingt durch den abrasiven Effekt des Beschichtungspulvers, welches mit hoher Geschwindigkeit durch die Fangdüse geleitet wird, unterliegt insbesondere der Strahlfangkanal der Fangdüse einem verhältnismäßig hohen Verschleiß, was sich im Allgemeinen dadurch bemerkbar macht, dass der Materialabtrag zu einem Aufweiten des Strahlfangkanals führt, was einen Druckabfall zur Folge hat. Dadurch ist mit der Zeit immer mehr Treib- bzw. Förderluft zum Fördern des Beschichtungspulvers notwendig, was einerseits unwirtschaftlich ist und andererseits auch zu unbefriedigenden Beschichtungsergebnissen durch ungleichmäßige Beschichtungspulverwolken führen kann bzw. die zu fördernde Pulvermenge mit der Zeit absinken kann.

Aus diesem Grund ist es bei Pulverförderinjektoren notwendig, die Fangdüse regelmäßig auszutauschen. Alternativ oder zusätzlich hierzu ist es beispielsweise aus der DE 198 24 802 A1 bekannt, den Strahlfangkanal der Fangdüse aus einem relativ harten Material, insbesondere einem glasartigen Material zu bilden.

Der vorliegenden Erfindung liegt die Problemstellung zugrunde, dass es im praktischen Betrieb einer Pulverdünnstrompumpe mit Pulverförderinjektor für den Betreiber der Pulverdünnstrompumpe häufig nicht erkennbar ist, wann der richtige Zeitpunkt für einen Austausch der Fangdüse des Pulverförderinjektors gekommen ist. Dies liegt daran, dass es im praktischen Betrieb üblich ist, die auf ein zu beschichtendes Objekt gerichtete Beschichtungspulverwolke visuell zu beobachten und anhand dieser visuellen Beobachtung die Drücke der Förderluft und der Zusatzluft entsprechend nachzuregeln, damit die von der Pulverdünnstrompumpe insgesamt geförderte Pulvermenge einen erwünschten Mindestwert nicht unterschreitet. Erst wenn durch geeignetes Nachregeln der Drücke der Förderluft und der Zusatzluft die gewünschte Mindest-Pulvermenge bei der Pulversprühvorrichtung nicht mehr erzielbar ist, wird in der Regel die Fangdüse des Pulverförderinjektors ausgetauscht. Dieser Zeitpunkt liegt allerdings deutlich hinter dem Zeitpunkt, wann aus wirtschaftlicher Sicht und im Hinblick auf ein optimales Beschichtungsergebnis tatsächlich der Austausch der Fangdüse empfehlenswert ist.

Auf Grundlage dieser Problemstellung liegt der vorliegenden Erfindung die Aufgabe zugrunde, eine Pulverdünnstrompumpe der eingangs genannten Art dahingehend weiterzubilden, dass diese auch ohne langwieriger Erfahrung des Betreibers möglichst wirtschaftlich genutzt werden kann, wobei gleichzeitig ein optimales Beschichtungsergebnis und insbesondere gleichmäßige Beschichtungspulverwolken bei der mit der Pulverdünnstrompumpe strömungsmäßig verbundenen Pulversprühvorrichtung erzielbar sind.

Diese Aufgabe wird erfindungsgemäß durch den Gegenstand des unabhängigen Patentanspruchs 1 gelöst, wobei vorteilhafte Weiterbildungen hiervon in den entsprechenden abhängigen Ansprüchen angegeben sind.

Demgemäß wird insbesondere eine Pulverdünnstrompumpe zum Fördern von Beschichtungspulver von einem Pulverreservoir zu einer Pulversprühvorrichtung vorgeschlagen, wobei die Pulverdünnstrompumpe einen Pulvereinlass, welcher strömungsmäßig mit dem Pulverreservoir verbunden oder verbindbar ist, und einen Pulverauslass aufweist, welcher strömungsmäßig mit der Pulversprühvorrichtung verbunden oder verbindbar ist. Die erfindungsgemäße Pulverdünnstrompumpe weist einen Pulverförderinjektor mit einer Treibdüse und einer Fangdüse auf. Erfindungsgemäß ist insbesondere vorgesehen, dass die Pulverdünnstrompumpe ferner eine Ventileinrichtung aufweist, um eine strömungsmäßige Verbindung zwischen dem Pulvereinlass der Pulverdünnstrompumpe und einem Pulvereinlass der Treibdüse wahlweise unterbrechen zu können.

Gemäß der erfindungsgemäßen Pulverdünnstrompumpe weist die Ventileinrichtung ein pneumatisch betätigbares Quetschventil auf, welches in dem Strömungspfad zwischen dem Pulvereinlass der Pulverdünnstrompumpe und dem Pulvereinlass der Treibdüse vorgesehen ist.

Das Vorsehen einer Ventileinrichtung zum wahlweisen Unterbrechen einer strömungsmäßigen Verbindung zwischen dem Pulvereinlass der Pulverdünnstrompumpe und einem Pulvereinlass der Treibdüse bringt diverse Vorteile mit sich, wie beispielsweise eine vereinfachte und besonders effiziente Reinigung der Pulverdünnstrompumpe bzw. des Pulverförderinjektors beispielsweise bei einem Pulverwechsel. Hierfür kann mit Hilfe der Ventileinrichtung der Strömungspfad zwischen dem Pulvereinlass der Pulverdünnstrompumpe und dem Pulvereinlass der Treibdüse unterbrochen werden, was es erlaubt, dass die Förderluft und/oder die Zusatzluft bzw. Zusatzluft als Spülluft zum Reinigen der Komponenten des Pulverförderinjektors sowie der stromabwärts des Pulverförderinjektors angeordneten Komponenten, insbesondere den Pulverauslass der Pulverdünnstrompumpe, einem an dem Pulverauslass der Pulverdünnstrompumpe angeschlossenen Pulverschlauch und/oder einer mit dem Auslass der Pulverdünnstrompumpe strömungsmäßig verbundenen Pulversprühvorrichtung verwendet werden.

Gemäß der erfindungsgemäßen Pulverdünnstrompumpe weist diese ferner eine Druckluft-Einlasseinrichtung auf, welche an mindestens einer Stelle in die strömungsmäßige Verbindung zwischen dem Pulvereinlass der Pulverdünnstrompumpe und dem Pulvereinlass der Treibdüse mündet, wobei die Druckluft-Einlasseinrichtung dazu dient, bedarfsweise und insbesondere zum Reinigen/Spülen des Pulverförderinjektors bzw. stromabwärts des Pulverförderinjektors vorgesehenen Komponenten, Druckluft als Spülluft zuzuführen.

In einem Pulverfördermodus der Pulverdünnstrompumpe kann hingegen über die Druckluft-Einlasseinrichtung Zusatzdruckluft als zusätzliche Transportdruckluft bedarfsweise in die strömungsmäßige Verbindung zwischen dem Pulvereinlass der Pulverdünnstrompumpe und dem Pulvereinlass der Treibdüse eingespeist werden.

Gemäß der erfindungsgemäßen Pulverdünnstrompumpe ist vorgesehen, dass die Druckluft-Einlasseinrichtung an einer Stelle zwischen der Ventileinrichtung und dem Pulvereinlass der Treibdüse in die strömungsmäßige Verbindung mündet. Diese Ausführungsform bringt insbesondere den Vorteil mit sich, dass bei der Pulverdünnstrompumpe eine automatische Funktionsuntersuchung realisierbar ist.

So ist es beispielsweise denkbar, dass der Druckluft-Einlasseinrichtung ein Filter zugeordnet ist, welcher für Luft, aber nicht für Beschichtungspulver durchlässig ist, wobei mindestens ein Drucksensor an einen Druckluftweg angeschlossen ist, welcher sich von einer der Druckluft-Einlasseinrichtung zugeordneten Druckluftleitung auf die Luftseite des Filters erstreckt, wobei die Luftseite durch den Filter von der strömungsmäßigen Verbindung zwischen dem Pulvereinlass der Pulverdünnstrompumpe und dem Pulvereinlass der Treibdüse getrennt ist.

Durch das Vorsehen eines solchen Drucksensors, welcher allgemein ausgedrückt ausgebildet sein sollte, einen statischen und/oder dynamischen Druck in einem Bereich in der strömungsmäßigen Verbindung zwischen dem Pulvereinlass der Pulverdünnstrompumpe und dem Pulvereinlass der Treibdüse zu erfassen, ist mit Hilfe einer entsprechenden Einrichtung zur Funktionsuntersuchung bzw. einer hierzu zugeordneten Auswerteeinrichtung möglich, automatisch den Verschleiß bzw. Verschleißgrad der Fangdüse zu erfassen.

Insbesondere kommt hierzu eine Auswerteeinrichtung zum Einsatz, welche ausgebildet ist, anhand eines von dem Drucksensor erfassten Druckwerte sowie anhand einer pro Zeiteinheit dem Pulverförderinjektor zugeführten Menge an Förderluft und/oder einer pro Zeiteinheit dem Pulverförderinjektor zugeführten Menge an Zusatzluft den Verschleiß bzw. Verschleißgrad der Fangdüse zu ermitteln.

In diesem Zusammenhang ist es insbesondere denkbar, wenn zu diesem Zweck die Ventileinrichtung betätigt wird, sodass der Strömungspfad zwischen dem Pulvereinlass der Pulverdünnstrompumpe und dem Pulvereinlass der Treibdüse unterbrochen wird, wobei die dem Pulverförderinjektor pro Zeiteinheit zugeführte Menge an Förderluft und Zusatzluft insbesondere maximiert und über den Drucksensor der sich dann aufbauende Unterdruck gemessen wird. Der gemessene Druckwert beschreibt ein direktes Verhältnis zum Verschleißgrad (Durchmesser) der Fangdüse.

In bevorzugten Realisierungen der erfindungsgemäßen Lösung weist die Pulverdünnstrompumpe einen dem Pulverförderinjektor zugeordneten Förderlufteinlass auf zum Zuführen von Förderluft zu der Treibdüse des Pulverförderinjektors, und einen dem Pulverförderinjektor zugeordneten Zusatzlufteinlass auf zum Zuführen von Zusatzluft in den Strömungsweg eines Pulver-Förderluft-Gemisches am Pulverauslass der Pulverdünnstrompumpe. Darüber hinaus ist vorzugsweise mindestens ein Förderlufteinstellelement vorgesehen zum Einstellen einer pro Zeiteinheit dem Förderlufteinlass zugeführten Menge an Förderluft und/oder zum Einstellen einer pro Zeiteinheit dem Zusatzlufteinlass zugeführten Menge an Zusatzluft.

Das Förderlufteinstellelement umfasst beispielsweise eine entsprechende Drosselvorrichtung, um die entsprechenden Druckluftströme genau und damit in feinen kleinen Schritten oder schrittlos und damit kontinuierlich einstellen zu können. Das möglichst genaue und optimale Einstellen einer pro Zeiteinheit dem Förderlufteinlass zugeführten Menge an Förderluft und einer pro Zeiteinheit dem Zusatzlufteinlass zugeführten Menge an Zusatzluft ist maßgeblich zur Erzielung von guten Beschichtungsqualitäten und Erzielung eines guten Wirkungsgrades bezüglich der erforderlichen Menge an Beschichtungspulver.

Die Drosselvorrichtung kann beispielsweise ein entsprechendes Drosselventil und einen steuerbaren elektrischen Motor mit einer Motorwelle zum Einstellen des Drosselventils aufweisen. Der Motor kann eine beliebige Motorart sein, deren Motorwelle auf definierte Drehwinkelpositionen gesteuert einstellbar ist. Es ist vorzugsweise ein elektrischer Schrittmotor.

In diesem Zusammenhang ist es von Vorteil, wenn mit Hilfe des Drucklufteinstellelements nicht nur eine pro Zeiteinheit dem Förderlufteinlass bzw. dem Zusatzlufteinlass zugeführte Menge an Druckluft eingestellt, sondern auch der entsprechende Istwert der dem Förderlufteinlass bzw. dem Zusatzlufteinlass zugeführten Druckluftrate ermittelbar, insbesondere erfassbar ist.

Gemäß Ausführungsformen der erfindungsgemäßen Pulverdünnstrompumpe ist die bereits erwähnte Auswerteeinrichtung der Einrichtung zur Funktionsuntersuchung nicht nur ausgebildet, den Verschleiß bzw. Verschleißgrad der Fangdüse des Pulverförderinjektors zu erfassen, sondern auch mindestens eine und vorzugsweise alle der nachfolgend angegebenen Situationen zu erfassen:
- eine zumindest teilweise Verstopfung am Pulverauslass der Pulverdünnstrompumpe;
- eine zumindest teilweise Verstopfung am Pulvereinlass der Pulverdünnstrompumpe; und
- ein Fehlen von Beschichtungspulver in dem strömungsmäßig mit dem Pulvereinlass der Pulverdünnstrompumpe verbundenen Pulverreservoir.

Die Auswerteeinrichtung erfasst mindestens eine dieser Situationen insbesondere unter Berücksichtigung des von dem mindestens einen Drucksensor erfassten Druckwertes sowie unter Berücksichtigung eines Istwertes einer pro Zeiteinheit dem Förderlufteinlass zugeführten Menge an Förderluft und anhand eines Istwertes einer dem Zusatzlufteinlass zugeführten Menge an Zusatzluft.

Gemäß Weiterbildungen der erfindungsgemäßen Pulverdünnstrompumpe ist ferner mindestens ein Pulverrate-Istwert-Sensor vorgesehen, welcher im oder in der Nähe des Pulverförderinjektors am oder im Strömungsweg des Pulver-Förderluft-Gemisches am Pulverauslass der Pulverdünnstrompumpe angeordnet ist und dazu dient, einen entsprechenden Istwert einer von dem Pulverförderinjektor geförderten Pulverrate zu erfassen. Der erfasste Istwert wird vorzugsweise ebenfalls von der Auswerteeinrichtung entsprechend ausgewertet, insbesondere unter Berücksichtigung eines Istwertes der pro Zeiteinheit dem Förderlufteinlass zugeführten Menge an Förderluft und eines Istwertes der pro Zeiteinheit dem Zusatzlufteinlass zugeführten Menge an Zusatzluft.

Auf diese Weise ist es insbesondere möglich, vorzugsweise automatisch und noch bevorzugter wahlweise automatisch den Istwert der pro Zeiteinheit dem Förderlufteinlass zugeführten Menge an Förderluft und/oder den Istwert der pro Zeiteinheit dem Zusatzlufteinlass zugeführten Menge an Zusatzluft so einzustellen, dass der Istwert der Pulverrate am Pulverauslass der Pulverdünnstrompumpe einen vorab festgelegten oder festlegbaren Mindestwert nicht überschreitet sowie einen vorab festgelegten oder festlegbaren maximalen Wert nicht überschreitet.

Gemäß einer Weiterbildung der erfindungsgemäßen Lösung ist der Auswerteeinrichtung der Pulverdünnstrompumpe eine Speichereinrichtung zugeordnet, in welcher für unterschiedliche am Pulverauslass der Pulverdünnstrompumpe strömungsmäßig angeschlossene Pulverschläuche insbesondere für festgelegte Werte der pro Zeiteinheit dem Förderlufteinlass des Pulverförderinjektors zugeführten Menge an Förderluft und der pro Zeiteinheit dem Zusatzlufteinlass des Pulverförderinjektors zugeführten Menge an Zusatzluft entsprechende Soll-Werte eines statischen Druckes in einem Bereich in der strömungsmäßigen Verbindung zwischen der Ventileinrichtung und dem Pulvereinlass der Treibdüse abgelegt sind.

Bei dieser Ausführungsform ist es möglich, dass die Auswerteeinrichtung die Parameter eines tatsächlich am Pulverauslass der Pulverdünnstrompumpe strömungsmäßig angeschlossenen Pulverschlauch, und insbesondere dessen Länge und/oder dessen Strömungswiderstand zu erfassen, und zwar indem ein Istwert des statischen Druckes in dem Bereich in der strömungsmäßigen Verbindung zwischen der Ventileinrichtung und dem Pulvereinlass der Treibdüse bei den festgelegten Werten der pro Zeiteinheit dem Förderlufteinlass zugeführten Menge an Förderluft und der pro Zeiteinheit dem Zusatzlufteinlass zugeführten Menge an Zusatzluft erfasst wird und mit den entsprechenden in der Speichereinrichtung abgelegten Sollwerten verglichen wird.

Nachfolgend wird unter Bezugnahme auf die beiliegenden Zeichnungen eine exemplarische Ausführungsform der erfindungsmäßen Pulverdünnstrompumpe näher beschrieben.

Nachfolgend werden exemplarische Ausführungsformen der Erfindung unter Bezugnahme auf die beiliegenden Zeichnungen näher beschrieben.

Es zeigen:
- FIG 1: schematisch in einer Schnittansicht eine exemplarische Ausführungsform der erfindungsgemäßen Pulverdünnstrompumpe;
- FIG 2: schematisch in einer Schnittansicht ein Pulverförderinjektor der Pulverdünnstrompumpe gemäß FIG. 1 in einem ausgebauten Zustand;
- FIG 3: schematisch in einer Schnittansicht der Pulverförderinjektor gemäß FIG. 2 in seinem in einem Gehäuse der Pulverdünnstrompumpe eingebauten Zustand; und
- FIG 4: schematisch in einer Schnittansicht eine weitere exemplarische, nicht erfindungsgemäße Ausführungsform der Pulverdünnstrompumpe.

Zur Förderung von Pulver, insbesondere Beschichtungspulver, von einem Pulverreservoir (beispielsweise in Gestalt eines Gebindes oder eines Pulverbehälters) zu einer Sprühvorrichtung, wie etwa einer Sprühpistole, wird meistens eine Strahlpumpe mit einem Pulverförderinjektor verwendet, welcher nach dem Injektorprinzip oder Venturi-Rohrprinzip arbeitet. In diesem Pulverförderinjektor erzeugt ein Luftstrahl in einem Unterdruckbereich, der durch Kanalverbreiterung gebildet wird, einen Unterdruck, der dazu genutzt wird, Pulver, wie beispielsweise Beschichtungspulver aus dem Pulverreservoir abzusaugen. Das abgesaugte Pulver wird vom Luftstrahl mitgerissen und zur Sprühvorrichtung gefördert. Durch Einstellen der Durchflussrate des Luftstromes kann der Unterdruck und damit die geförderte Pulvermenge eingestellt werden.

Um einen konstanten Förderstrom des Pulver-Luft-Gemisches stromabwärts des Pulverauslasses des Pulverförderinjektors zu erreichen, muss die Luftgeschwindigkeit in den Fluidleitungen, also insbesondere in den Pulverförderschläuchen, etwa 10 bis 15 m/sec betragen. Bei einer niedrigeren Luftgeschwindigkeit in der Fluidleitung wird die Pulverförderung ungleichmäßig; es entsteht eine Pulsation des Pulver-Luft-Gemisches, welche sich bis zum Pulveraustritt an der Pulversprühvorrichtung fortpflanzt. Bei höherer Luftgeschwindigkeit wird das elektrostatische Auftragen des Beschichtungspulvers auf das zu beschichtende Objekt sehr stark beeinträchtigt, weil dann die Gefahr besteht, dass das schon auf dem Objekt abgeschiedene Pulver wieder weggeblasen wird.

Je nach den Erfordernissen des Beschichtungsvorganges wird die der Pulversprühvorrichtung zugeführte Pulvermenge erhöht oder erniedrigt. Ein Praxiswert für die pro Zeiteinheit zugeführte Pulvermenge liegt bei etwa 300 g/min. Wenn die pro Zeiteinheit zugeführte Pulvermenge reduziert werden muss, wird als erstes der Druck der zum Pulverförderinjektor zugeführten Förderluft reduziert. Damit wird auch die Duchflussgeschwindigkeit der Förderluft in den Fluidleitungen reduziert. Jedoch darf die Gesamtluftmenge weder zu niedrig werden noch einen Höchstwert überschreiten. Um diese Luftmengenreduktion auszugleichen, also um wieder auf eine Luftgeschwindigkeit von mindestens 10 m/sec zu gelangen, unter gleichzeitiger Beibehaltung des reduzierten Pulverausstoßes, wird dem Pulverförderinjektor mehr Zusatzluft zugeführt.

Die bekannte Funktion der Pulverförderinjektoren ist folgendes: Die Förderluft erzeugt im Pulverförderinjektor einen Unterdruck, durch welchen Beschichtungspulver aus einem Pulverreservoir angesaugt, von der Förderluft erfasst und durch eine Fluidleitung, wie beispielsweise ein Pulverschlauch, der Pulversprühvorrichtung zugeführt wird. Durch Verändern des Druckes und damit auch der Menge der Förderluft kann die pro Zeiteinheit geförderte Menge an Beschichtungspulver eingestellt werden. Da die Förderleistung von der Größe des von der Förderluft erzeugten Unterdruckes im Pulverförderinjektor abhängig ist, kann bei konstanter oder variabler Förderluft die Förderleistung auch dadurch geregelt werden, dass in den Unterdruckbereich des Injektors über eine Druckluft-Einlasseinrichtung Zusatzluft eingeleitet wird, um dadurch die Größe des Unterdrucks entsprechend der gewünschten Fördermenge von Druck zu verändern. Dies bedeutet, dass die Pulverfördermenge nicht allein von der Förderluftmenge abhängig ist, sondern von der Differenz von Förderluft minus Zusatzluft. Die Gesamtluftmenge, welche das Beschichtungspulver transportiert, muss jedoch aus den eingangs genannten Gründen für einen bestimmten Beschichtungsvorgang konstant bleiben.

In der Praxis beobachtet die Bedienperson die auf das zu beschichtende Objekt gerichtete Beschichtungspulverwolke und stellt anhand dieser visuellen Beobachtung die Drücke der Förderluft und der Zusatzluft ein. Dieses manuell durchgeführte Einstellen erfordert jedoch eine gewisse Erfahrung der Bedienungsperson. Darüber hinaus verändert sich im Betrieb des Pulverförderinjektors seine Pulverförderleistung. Dies ist insbesondere dadurch bedingt, dass der Luftstrom und die Pulverpartikel die Treibdüse und den Strahlfangkanal des Pulverförderinjektors im Betrieb abnutzen. Dies hat den Nachteil, dass sich in Abhängigkeit vom Abnutzungsgrad auch der Pulvervolumenstrom (pro Zeiteinheit geförderte Pulvermenge) ändert, was ungleiche Beschichtungsstärken und Beschichtungsqualitäten auf einem zu beschichtenden Gegenstand zur Folge hat.

Der Erfindung liegt von daher u.a. die Problemstellung zugrunde, dass es im Betrieb eines Pulverförderinjektors häufig nur mit großer Erfahrung der Bedienperson möglich ist, abzuschätzen, wann tatsächlich die Fangdüse bzw. der Strahlfangkanal der Fangdüse so stark verschlissen ist, dass ein Austausch notwendig ist. Darüber hinaus wurde es als problematisch angesehen, dass es angesichts der Abnutzung der Treibdüse und des Strahlfangkanals die Einstellung der Drücke der Förderluft und der Zusatzluft häufig nicht im richtigen Maß erfolgen kann.

Insbesondere wurde vorliegend erkannt, dass zunehmen ein Bedarf nach einer Pulverdünnstrompumpe existiert, mit welcher automatisch der Verschleißgrad der Fangdüse erfasst werden kann. Darüber hinaus sollen auch weitere Funktionen automatisch erkannt werden, wie beispielsweise die Verstopfungen im Ansaugschlauch des Pulvers, etc.

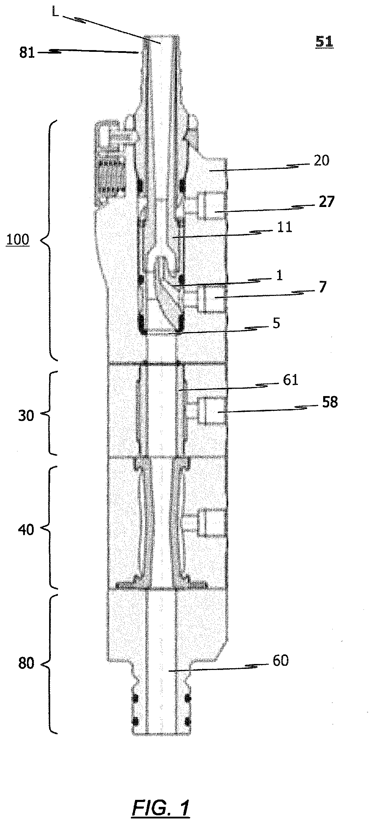

FIG. 1 zeigt schematisch und in einer Schnittansicht eine bevorzugte Ausführungsform der erfindungsgemäßen Pulverdünnstrompumpe 51, welche ausgebildet ist zum Fördern von Pulver bzw. Beschichtungspulver von einem (in FIG. 1 nicht gezeigten) Pulverreservoir zu einer (ebenfalls in FIG. 1 nicht gezeigten) Pulversprühvorrichtung.

Die Pulversprühvorrichtung kann eine manuell bedienbare Sprühpistole oder ein automatisch steuerbares Sprühgerät sein. Es enthält vorzugsweise mindestens eine Hochspannungselektrode, welche zur elektrostatischen Aufladung des von der Pulversprühvorrichtung versprühten Beschichtungspulvers von einer Hochspannungsquelle mit Hochspannung versorgt wird. Die Hochspannungsquelle kann in der Pulversprühvorrichtung integriert sein. Die Pulversprühvorrichtung kann eine Sprühöffnung oder einen Rotationszerstäuber aufweisen.

Ein Pulverreservoir im Sinne der vorliegenden Offenbarung weist vorzugsweise mindestens einen Pulverbehälter mit einer Pulverkammer auf, aus welcher mit Hilfe der Pulverdünnstrompumpe 51 Pulver bzw. Beschichtungspulver mittels Unterdruck angesaugt wird, wonach dann das Pulver bzw. Beschichtungspulver unter Überdruck von der Pulverdünnstrompumpe 51 zu einer entsprechenden Pulversprühvorrichtung strömt.

Der Pulverbehälter weist vorzugsweise mindestens eine Pulverauslassöffnung auf, an welche der Pulvereinlass der Pulverdünnstrompumpe angeschlossen ist. Insbesondere ist in diesem Zusammenhang denkbar, dass die mindestens eine Pulverauslassöffnung des Pulverbehälters in einer Seitenwand des Pulverbehälters angeordnet ist.

Die Pulverkammer des Pulverreservoirs kann mit einer Fluidisiereinrichtung versehen sein zum Fluidisieren des in der Pulverkammer des Pulverbehälters aufgenommenen Beschichtungspulvers. Die Fluidisiereinrichtung kann mindestens eine Fluidisierwand aus einem offenporigen oder mit engen Bohrungen versehenen Material enthalten, welches für Druckluft, jedoch nicht für Pulver bzw. Beschichtungspulver durchlässig ist. Insbesondere ist es in diesem Zusammenhang von Vorteil, wenn bei dem Pulverbehälter des Pulverreservoirs die Fluidisierwand den Boden des Pulverbehälters ausbildet und zwischen der Pulverkammer des Pulverbehälters und einer Fluidisier-Druckluftkammer angeordnet ist.

Eine exemplarische Ausführungsform eines als Pulverbehälter ausgeführten Pulverreservoirs im Sinne der vorliegenden Offenbarung wird beispielsweise in der Druckschrift EP 2 675 574 A2 beschrieben.

Die Ausführungsform der erfindungsgemäßen Pulverdünnstrompumpe 51, wie sie schematisch in FIG. 1 gezeigt ist, zeichnet sich durch einen modularen Aufbau aus und besteht im Wesentlichen aus einem Pulvereinlass-Modul 80, einem Quetschventil-Modul 40, einem Druckluft-Einlass-Modul 30 und einem als Pumpenmodul ausgebildeten Pulverförderinjektor 100 am Pulverauslass 81 der Pulverdünnstrompumpe 51. Diese Module sind miteinander lösbar verbunden, um eine besonders kompakte Pulverdünnstrompumpe 51 auszubilden.

Wie in FIG. 1 schematisch dargestellt, weist die erfindungsgemäße Pulverdünnstrompumpe 51 einen Pulvereinlass 80 auf, der mit Hilfe einer (in FIG. 1 nicht gezeigten) Pulverleitung, insbesondere mit Hilfe eines Ansaugrohres oder dergleichen, strömungsmäßig mit dem bereits erwähnten und in FIG. 1 nicht gezeigten Pulverreservoir verbunden oder verbindbar ist.

An einem gegenüberliegenden Endbereich der Pulverdünnstrompumpe 51 ist ein Pulverauslass 81 vorgesehen, welcher mit Hilfe einer in FIG. 1 nicht gezeigten Pulverleitung, insbesondere mit Hilfe eines Pulverschlauches, mit einem Pulvereinlass einer Pulversprühvorrichtung (insbesondere Beschichtungspistole) strömungsmäßig verbunden bzw. verbindbar ist.

Im Einzelnen sind bei der in FIG. 1 gezeigten exemplarischen Ausführungsform sowohl der Pulvereinlass 80 der Pulverdünnstrompumpe 51 als auch der Pulverauslass 81 der Pulverdünnstrompumpe 51 jeweils als Schlauchanschlussstutzen ausgebildet, an den die entsprechende Pulverleitung/der entsprechende Pulverschlauch aufsteckbar und beispielsweise mit einer Schlauchklemme fixierbar ist. Selbstverständlich kommen aber auch andere Ausführungsformen für den Pulvereinlass 80 bzw. den Pulverauslass 81 der Pulverdünnstrompumpe 51 in Frage.

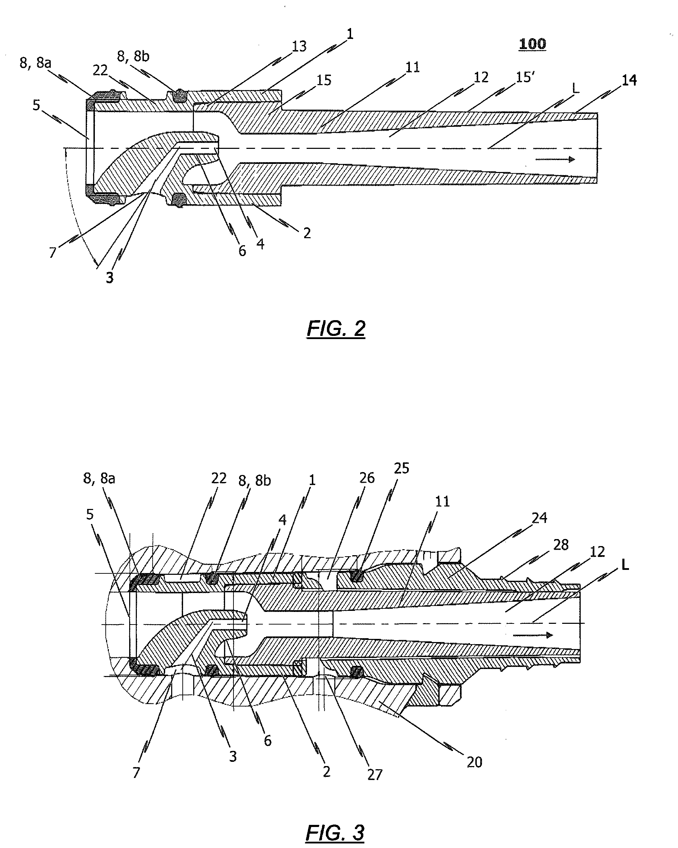

Vorzugsweise liegen der Pulvereinlass 80 und der Pulverauslass 81 auf einer gemeinsamen Längsachse L (vgl. FIG. 3), um zu erreichen, dass das zu fördernde Pulver/Beschichtungspulver nicht oder zumindest nur gering innerhalb der Pulverdünnstrompumpe 51 umzulenken ist, was die Verwirbelung des Pulver-Luftgemisches in der Pulverdünnstrompumpe 51 deutlich verringert.

Die Pulverdünnstrompumpe 51 weist einen Pulverförderinjektor 100 auf, welcher nach dem Injektorprinzip oder Venturi-Rohrprinzip arbeitet. Hierzu weist die Pulverdünnstrompumpe 51 einen Pulverförderinjektor 100 auf, in welchem ein Luftstrahl in einem Unterdruckbereich, der durch eine Kanalverbreiterung gebildet wird, ein Unterdruck erzeugt wird, wobei dieser Unterdruck dazu benutzt wird, Pulver bzw. Beschichtungspulver über den Pulvereinlass 80 der Pulverdünnstrompumpe 51 aus dem Pulverreservoir abzusaugen. Das abgesaugte Pulver bzw. Beschichtungspulver wird von dem Luftstrahl mitgerissen und zur Pulversprühvorrichtung gefördert. Durch Einstellen der Durchflussrate des Luftstromes kann der Unterdruck und damit die geförderte Pulvermenge eingestellt werden.

Nachfolgend wird zunächst unter Bezugnahme auf die Darstellungen in FIG. 2 und 3 eine exemplarische Ausführungsform eines Pulverförderinjektors 100 näher beschrieben, welcher sich für den Einsatz in der erfindungsgemäßen Pulverdünnstrompumpe 51 eignet.

Die exemplarische Ausführungsform des Pulverförderinjektors 100 weist einen ersten Bereich auf, der als Treibdüse 1 dient, und einen zweiten Bereich auf, der als Fangdüse 11 dient. Der zweite Bereich des Pulverförderinjektors 100, der als Fangdüse 11 dient, weist in seinem Inneren einen als Strahlfangkanal 12 dienenden Kanal mit einer Längsachse L auf. Durch diesen Kanal strömt - wenn der Pulverförderinjektor 100 beispielsweise in einer Pulverdünnstrompumpe 51 zur Pulverförderung verwendet wird - ein Gemisch aus Pulver bzw. Beschichtungspulver und Förderluft.

Der Kanal, der nachfolgend auch als Strahlfangkanal 12 oder Pulverstromkanal bezeichnet wird, weist eine Längsachse L auf, wobei in FIG. 2 die Strömungsrichtung durch einen Pfeil gekennzeichnet ist. Das zu fördernde Gemisch aus Pulver/Beschichtungspulver und Förderluft tritt an einem trichterförmigen Düseneinlass 13 in den als Fangdüse 11 dienenden zweiten Bereich ein und an einem Düsenauslass 14 wieder aus der Fangdüse 11 aus. Zumindest im Bereich des Düseneinlasses 13 und im Bereich des Düsenauslasses 14 ist der zweite Bereich, der als Fangdüse 11 dient, auf der Außenseite zylinderförmig ausgebildet, so dass entsprechende zylinderförmige Führungsflächen 15, 15' gebildet werden.

Der stromaufwärts von dem zweiten Bereich (Fangdüse 11) angeordnete erste Bereich des Pulverförderinjektors 100 übernimmt die Funktion einer Treibdüse 1. Der erste Bereich (Treibdüse 1) besteht im Wesentlichen aus einem Treibdüsengehäuse 2 mit einem Förderluftkanal 3 und einer mit dem Förderluftkanal 3 strömungsmäßig verbundenen Düse 4, deren Düsenöffnung axial gegenüber dem Strahlfangkanal 12 liegt.

Obgleich in FIG. 2 nicht dargestellt, ist es denkbar, dass die Düse 4 bzw. die Düsenöffnung durch ein Düsenmundstück gebildet wird, welches als ein Metall-Insert ausgebildet und insbesondere untrennbar mit dem Treibdüsengehäuse 2 verbunden sein kann.

Bei dem in FIG. 2 schematisch in einer Schnittansicht gezeigten Pulverförderinjektor 100 kann vorgesehen sein, dass der als Treibdüse 1 dienende erste Bereich und der als Fangdüse 11 dienende zweite Bereich als ein Bauteil vereint und untrennbar miteinander verbunden sind. In diesem Zusammenhang ist es grundsätzlich denkbar, den ersten und zweiten Bereich 1, 11 des Pulverförderinjektors 100 einstückig aus ein und demselben Material zu bilden, beispielsweise als Spritzgussbauteil.

Alternativ hierzu, und wie in FIG. 2 schematisch angedeutet, kann der erste und zweite Bereich 1, 11 des Pulverförderinjektors 100 auch separat ausgebildet werden, wobei dann diese beiden Bereiche 1, 11 lösbar oder untrennbar miteinander verbunden werden, beispielsweise durch Steckung, Klebung oder Verpressung. Dies hätte den Vorteil, dass die beiden Bereiche 1, 11 des zweiten Bereiches 11 des Pulverförderinjektors 100 aus unterschiedlichen Materialien, insbesondere unterschiedlichen Kunststoffmaterialien gebildet werden können.

Ein weiterer Vorteil dieser Ausführungsform ist, dass der zweite Bereich 11 des Pulverförderinjektors 100, welcher bezüglich der Längsachse L des Strahlfangkanals 12 rotationssymmetrisch ausgeführt ist, als ein Drehteil ausgebildet sein kann. Dies vereinfacht insbesondere die Fertigung und Montage des zweiten Bereiches 11 des Pulverförderinjektors 100. Außerdem kann der zweite Bereich 11 des Pulverförderinjektors 100 bei Bedarf einzeln ausgetauscht werden, d.h. ohne den ersten Bereich 1 des Pulverförderinjektors 100.

Die exemplarische Ausführungsform des Pulverförderinjektors 100, wie er beispielsweise schematisch in FIG. 2 in einer Schnittansicht gezeigt ist, zeichnet sich darüber hinaus dadurch aus, dass es sich hierbei um einen sogenannten "Inline"-Pulverförderinjektor 100 handelt, was bedeutet, dass das mit dem Pulverförderinjektor 100 zu fördernde Pulver/Beschichtungspulver axial entlang der Längsachse L des Strahlfangkanals 12 durch den gesamten Pulverförderinjektor 100 (und vorzugweise auch durch die gesamte Pulverdünnstrompumpe 51) fließt.

Insbesondere ist bei der exemplarischen Ausführungsform des Pulverförderinjektors 100 vorgesehen, dass der erste Bereich 1 des Pulverförderinjektors 100 einen Pulvereinlass 5 aufweist, welcher axial dem Düsenauslass 14 des zweiten Bereiches (Fangdüse 11) bzw. dem Pulverauslass der Pulverdünnstrompumpe 51 gegenüberliegt.

Durch diese axiale Anordnung des Pulvereinlasses 5 und Pulverauslasses 14 kann erreicht werden, dass das zu fördernde Pulver/Beschichtungspulver nicht oder zumindest nur gering innerhalb des Pulverförderinjektors 100 umzulenken ist, was die Verwirbelung des Pulver-Luftgemisches in dem Pulverförderinjektor 100 deutlich verringert.

Darüber hinaus wiederfährt dem Pulver-Luftgemisch in dem Pulverförderinjektor 100 nur ein minimaler Strömungswiderstand, was insgesamt die mit dem Pulverförderinjektor 100 erzielbare Förderleistung bei gleicher Förderluftmenge erhöht.

Im Einzelnen, und wie in FIG. 2 schematisch angedeutet, ist der erste Bereich des Pulverförderinjektors 100, welcher als Treibdüse 1 dient, im Wesentlichen zylindrisch aufgebaut und weist ein Treibdüsengehäuse 2 mit einer im Wesentlichen zylindrischen Außenfläche auf. Dieses Treibdüsengehäuse 2 definiert im Inneren zumindest bereichsweise einen Förderluftkanal 3, der axial oder zumindest im Wesentlichen axial bezüglich der Längsachse L des Strahlfangkanals 12 angeordnet ist. In den Förderluftkanal 3 erstreckt sich ein Düsenvorsprung 6, in welchem die Düsenöffnung 4 der Treibdüse 1 ausgebildet ist.

Die Düsenöffnung 4 ist über den Förderluftkanal 3 strömungsmäßig mit einem Förderlufteinlass 7 verbunden, welcher nicht-axial bezüglich der Längsachse L des als Strahlfangkanal 12 dienenden Kanals des zweiten Bereichs 11 angeordnet und ausgerichtet ist. Andererseits ist - wie bereits ausgeführt - die Düsenöffnung 4 der Treibdüse 1 axial bezüglich der Längsachse L des Strahlfangkanals 12 angeordnet.

Im Betrieb des Pulverförderinjektors 100 wird über den Förderlufteinlass 7 der Treibdüse 1 Förderluft zugeführt, welcher über die Düsenöffnung 4 der Treibdüse 1 in Richtung des Strahlfangkanals 12 ausströmt. Aufgrund der düsenförmigen Anordnung zumindest des stromaufwärtigen Bereiches des Strahlfangkanals 12 wird die Förderluft in die Fangdüse 11 gepresst und bedingt durch den verhältnismäßig kleinen Durchmesser der Düsenöffnung 4 der Treibdüse 1 bildet sich ein Luftstrom hoher Geschwindigkeit aus, wodurch im Bereich des Pulvereinlasses 5 des Pulverförderinjektors 100 ein Unterdruck ausgebildet wird. Durch diesen sich im Betrieb des Pulverförderinjektors 100 im Pulvereinlassbereich ausbildenden Unterdruck wird Beschichtungspulver angesaugt, wenn der Pulvereinlass 5 des als Treibdüse 1 dienenden ersten Bereiches 1 des Pulverförderinjektors 100 über einen Pulverkanal der Pulverdünnstrompumpe 51 und/oder über eine Pulverleitung etc. strömungsmäßig mit einem entsprechenden Pulverbehälter oder dergleichen in Verbindung besteht.

Wie in FIG. 2 schematisch angedeutet, weist das Treibdüsengehäuse 2 an seinem stromabwärtigen Endbereich eine zylinderförmige Innenkontur auf, in welche der stromaufwärtige Endbereich des zweiten Bereiches 11 des Pulverförderinjektors 100, d.h. der stromaufwärtige Endbereich des als Fangdüse 11 dienenden Bereiches des Pulverförderinjektors 100 einsetzbar und entsprechend lösbar oder unlösbar mit dem Treibdüsengehäuse 2 verbindbar ist (beispielsweise durch Klemmung, Klebung oder durch Verpressen).

Insgesamt werden somit der erste und zweite Bereich 1, 11 des Pulverförderinjektors 100 als ein Bauteil vereint miteinander verbunden. Diese beiden als ein Bauteil vereinten miteinander verbundenen Bereiche 1, 11 weisen insgesamt eine Außenkontur auf, die bezüglich der Längsachse L des Strahlfangkanals 12 vorzugsweise rotationssymmetrisch ist. Auf diese Weise lässt sich der Pulverförderinjektors 100 beliebig in einer Aufnahme 21 eines Gehäuses 20 der Pulverdünnstrompumpe 51 einsetzen, ohne dass der Benutzer auf eine bestimmte Ausrichtung der Düsenanordnung 100 zu achten hat.

Wie es der schematischen Schnittansicht gemäß FIG. 2 ferner entnommen werden kann, ist der Pulverförderinjektor 100 mit entsprechenden Dichtungen 8 versehen, über welche der Pulverförderinjektor 100 gegenüber einem Gehäuse 20 der Pulverdünnstrompumpe 51 abdichtbar ist, wenn der Pulverförderinjektor 100 in dem Gehäuse 20 der Pulverdünnstrompumpe 51 aufgenommen ist.

Im Einzelnen ist es hierbei bevorzugt, dass mindestens zwei umlaufende Dichtungsbereiche 8a, 8b vorgesehen sind, wobei zwischen den beiden umlaufenden Dichtungsbereichen 8a, 8b eine Rille oder Ringnut 22 gebildet wird. In diesem Bereich, wo die Rille bzw. Ringnut 22 zwischen den beiden umlaufenden Dichtungsbereichen 8a, 8b gebildet wird, mündet auch der Förderlufteinlass 7 der Treibdüse 1.

FIG. 3 zeigt schematisch und in einer Schnittansicht die exemplarische Ausführungsform des Pulverförderinjektors 100 gemäß FIG. 2 in einem Zustand, in welchem der Pulverförderinjektor 100 zumindest bereichsweise in einem Gehäuse 20 der Pulverdünnstrompumpe 51 aufgenommen ist.

Wie dargestellt, weist hierzu das Gehäuse 20 der Pulverdünnstrompumpe 51 eine Aufnahme 21 auf, deren Größe an den Außendurchmesser und Außenkonfiguration zumindest des stromaufwärtigen Endbereiches des ersten Bereiches (Treibdüse 1) des Pulverförderinjektors 100 angepasst ist. Durch die Dichtungsringe 8a, 8b des Pulverförderinjektors 100 wird zumindest der stromaufwärtige Endbereich des Pulverförderinjektors 100 gegenüber der Wandung der in dem Gehäuse 20 der Pulverdünnstrompumpe 51 vorgesehenen Aufnahme 21 abdichtet.

Der Darstellung in FIG. 3 ist ferner zu entnehmen, dass die zwischen den beiden umlaufenden Dichtungsbereichen 8a, 8b des Pulverförderinjektors 100 ausgebildete Rille oder Ringnut 22 mit der Wandung der Aufnahme 21 des Gehäuses 20 der Pulverdünnstrompumpe 51 einen Ringraum bildet, wobei dieser Ringraum über einen im Gehäuse 20 der Pulverdünnstrompumpe 51 ausgebildeten Förderluftanschluss 23 strömungsmäßig verbunden ist.

Der schematischen Schnittansicht in FIG. 3 ist ferner zu entnehmen, dass ein Pulverleitungsanschluss 24 auf dem stromabwärtigen Endbereich des zweiten Bereiches des Pulverförderinjektors 100 (Fangdüse 11) aufgesteckt und insbesondere lösbar mit dem stromabwärtigen Endbereich verbunden ist.

Der Pulverleitungsanschluss 24 weist hierzu einen bezüglich der Längsachse L des Strahlfangkanals 12 axial angeordneten Aufnahmekanal auf, in welchem zumindest bereichsweise der stromabwärtige Endbereich der Fangdüse 11 aufnehmbar ist. Des Weiteren kann - wie in FIG. 3 schematisch angedeutet - der Pulverleitungsanschluss 24 eine entsprechende Dichtung 25 aufweisen, um insbesondere den Pulverleitungsanschluss 24 gegenüber dem Gehäuse 20 der Pulverdünnstrompumpe 51 abzudichten.

Der Pulverleitungsanschluss 24 ist derart auf den stromabwärtigen Endbereich der Fangdüse 11 aufsteckbar, dass ein von dem Gehäuse 20 der Pulverdünnstrompumpe 51, dem Pulverleitungsanschluss 24 sowie des Pulverförderinjektors 100 begrenzter Ringraum 26 gebildet wird, welcher strömungsmäßig mit einem in dem Gehäuse 20 der Pulverdünnstrompumpe 51 ausgebildeten Zusatzluftkanal 27 in Verbindung steht. Über diesen Zusatzluftkanal 27 kann dem Ringraum 26 Zusatzluft zugeführt werden, welche dem mit dem Pulverförderinjektor 100 geförderten Pulver-Luft-Gemisch hinzugefügt werden kann.

Zurückkommend auf die Darstellung in FIG. 1 wird nachfolgend die exemplarische Ausführungsform der erfindungsgemäßen Pulverdünnstrompumpe 51 näher beschrieben, bei welcher ein Pulverförderinjektor 100 gemäß FIG. 2 zum Einsatz kommt.

Im Betrieb der Pulverdünnstrompumpe 51 wird über den Förderlufteinlass 7 der Treibdüse 1 des Pulverförderinjektors 100 Förderluft zugeführt, welche über die Düsenöffnung der Treibdüse 1 in Richtung des Strahlfangkanals 12 ausströmt. Aufgrund der düsenförmigen Anordnung zumindest des strömungsauswertigen Bereiches des Strahlfangkanals 12 wird die Förderluft in die Fangdüse 11 gepresst und bedingt durch den verhältnismäßig kleinen Durchmesser der Düsenöffnung der Treibdüse 1 bildet sich ein Luftstrom hoher Geschwindigkeit aus, wodurch im Bereich des Pulvereinlasses des Pulverförderinjektors 100 ein Unterdruck ausgebildet wird. Durch diesen sich im Betrieb der Pulverdünnstrompumpe 51 im Pulvereinlassbereich ausbildenden Unterdruck wird Pulver bzw. Beschichtungspulver angesaugt, wenn der Pulvereinlass des als Treibdüse 1 dienenden ersten Bereiches des Pulverförderinjektors 100 über eine Pulverleitung etc. strömungsmäßig mit einem entsprechenden Pulverbehälter oder dergleichen in Verbindung steht. Wie es der schematischen Schnittansicht gemäß FIG. 1 ferner entnommen werden kann, ist der Pulverförderinjektor 100 in einer Aufnahme der als Pumpenmodul ausgeführten Pulverdünnstrompumpe 51 aufgenommen, so dass das Pumpenmodul im Hinblick auf den Pulverförderinjektor 100 als Gehäuse 20 bzw. Injektorgehäuse dient.

Zusätzlich zu dem zuvor beschriebenen Pulverförderinjektor 100 weist die als Pumpenmodul ausgebildete Pulverdünnstrompumpe 51 der exemplarischen Ausführungsform ein Quetschventil 40 auf, welches in einem Strömungspfad zwischen dem Pulvereinlass 80 des Pumpenmoduls und dem Pulvereinlass 5 der Treibdüse 1 des Pulverförderinjektors 100 angeordnet ist.

Dieses Quetschventil 40 ist vorzugsweise von einer Steuereinrichtung der Pulverdünnstrompumpe 51 ansteuerbar, um bedarfsweise eine strömungsmäßige Verbindung zwischen dem Pulvereinlass 80 des Pumpenmoduls und dem Pulvereinlass 5 der Treibdüse 1 des Pulverförderinjektors 100 zu unterbrechen. Eine solche Unterbrechung des Strömungspfades findet - wie es nachfolgend näher beschrieben wird - vorzugsweise in einem Reinigungsbetrieb der Pulverdünnstrompumpe 51 statt.

Darüber hinaus ist zwischen dem Quetschventil 40 und dem Pulvereinlass 5 der Treibdüse 1 des Pulverförderinjektors 100 eine Druckluft-Einlasseinrichtung 30 vorgesehen, um bedarfsweise Druckluft dem Pulverförderinjektor 100 zuzuführen. Im Einzelnen ist bei der in FIG. 1 gezeigten exemplarischen Ausführungsform der erfindungsgemäßen Pulverdünnstrompumpe 51 vorgesehen, dass die Druckluft-Einlasseinrichtung 30 in dem Strömungspfad zwischen dem Quetschventil 40 und dem Pulvereinlass 5 der Treibdüse 1 des Pulverförderinjektors 100 angeordnet ist.

Das Pumpenmodul als solches weist einen ersten Druckluftanschluss 7 auf, über den der Treibdüse 1 des Pulverförderinjektors 100 Förderluft zuführbar ist. Darüber hinaus weist das Pumpenmodul einen zweiten Druckluftanschluss 27 auf, über den dem Pulverförderinjektor 100 Zusatzluft zuführbar ist.

Zusätzlich hierzu weist das Pumpenmodul einen dritten Druckluftanschluss auf, über den bedarfsweise der Druckluft-Einlasseinrichtung 30 Druckluft zuführbar ist, und einen vierten Druckluftanschluss auf, über den ein entsprechender Steuerdruck dem Quetschventil 40 zuführbar ist zum Betätigen des Quetschventils 40.

Die zum Betrieb der als Pumpenmodul ausgebildeten Pulverdünnstrompumpe 51 notwendigen Drücke werden von einer entsprechenden Druckluftsteuerung der Pulverdünnstrompumpe 51 bereitgestellt.

Wie dargestellt, weist das Pumpengehäuse 20 der Pulverdünnstrompumpe 51, in welchem zumindest bereichsweise der Pulverförderinjektor 100 aufgenommen ist, einen Pulverzuführkanal 60 auf, welcher den Pulvereinlass 80 der Pulverdünnstrompumpe 51 strömungsmäßig mit dem Pulvereinlass 5 der Treibdüse 1 des Pulverförderinjektors 100 verbindet. Das bereits genannte Quetschventil 40 ist dabei ausgebildet, bedarfsweise eine über den Pulverzuführkanal 60 zwischen dem Pulvereinlass 80 der Pulverdünnstrompumpe 51 und dem Pulvereinlass 5 der Treibdüse 1 des Pulverförderinjektors 100 gebildete strömungsmäßig Verbindung zu trennen.

Bei der exemplarischen Ausführungsform der erfindungsgemäßen Pulverdünnstrompumpe 51 ist vorgesehen, dass der Pulverzuführkanal 60 geradlinig entlang einer Längsachse L verläuft, wobei diese Längsachse L des Pulverzuführkanals 60 mit einer von dem Strahlfangkanal 12 definierten Längsachse L übereinstimmt bzw. parallel zu einer von dem Strahlfangkanal 12 definierten Längsachse L verläuft.

Wie in FIG. 1 dargestellt, weist die Ausführungsform der erfindungsgemäßen Pulverdünnstrompumpe 51 ferner eine Druckluft-Einlasseinrichtung 30 auf, welche an einer Stelle in die strömungsmäßige Verbindung zwischen dem Pulvereinlass 80 der Pulverdünnstrompumpe 51 und dem Pulvereinlass 5 der Treibdüse 1 des Pulverförderinjektors 100 mündet, um bedarfsweise Zusatzdruckluft als zusätzliche Transportdruckluft oder Spülluft (in einem Reinigungsbetrieb der Pulverdünnstrompumpe 51) zuzuführen.

Im Einzelnen ist die Druckluft-Einlasseinrichtung 30 an einer Stelle zwischen dem Quetschventil 40 und dem Pulvereinlass 5 der Treibdüse 1 des Pulverförderinjektors 100 angeordnet und mündet dort in die strömungsmäßige Verbindung.

Die erfindungsgemäße Pulverdünnstrompumpe 51, wie sie schematisch beispielsweise in FIG. 1 dargestellt ist, weist ferner eine Einrichtung zur Funktionsuntersuchung der Pulverdünnstrompumpe 51 oder Komponenten hiervon auf. Hierzu umfasst die Einrichtung zur Funktionsuntersuchung mindestens einen Drucksensor (in den Figuren nicht dargestellt), um einen statischen und/oder dynamischen Druck in einem Bereich in der strömungsmäßigen Verbindung zwischen dem Pulvereinlass 80 der Pulverdünnstrompumpe 51 und dem Pulvereinlass 5 der Treibdüse 1 des Pulverförderinjektors 100 zu erfassen.

Der mindestens eine Drucksensor der Einrichtung zur Funktionsuntersuchung ist bei der Ausführungsform der erfindungsgemäßen Pulverdünnstrompumpe 51 ausgebildet, einen statischen und/oder dynamischen Druck in einem Bereich in der strömungsmäßigen Verbindung zwischen dem Quetschventil 40 und dem Pulvereinlass 5 der Treibdüse 1 des Pulverförderinjektors 100 zu erfassen. Zusätzlich kann der mindestens eine Drucksensor ferner ausgebildet sein, über einen festlegbaren Zeitraum den zeitlichen Verlauf eines statischen und/oder dynamischen Druckes zu erfassen.

Bei der in FIG. 1 schematisch gezeigten Ausführungsform der erfindungsgemäßen Pulverdünnstrompumpe 51 ist der Druckluft-Einlasseinrichtung 30 ein Filter 61 zugeordnet, welcher für Luft, aber nicht für Beschichtungspulver durchlässig ist. Der mindestens eine Drucksensor der Einrichtung zur Funktionsuntersuchung ist vorzugsweise an einen Druckluftweg angeschlossen, welcher sich von einer der Druckluft-Einlasseinrichtung 30 zugeordneten Druckluftleitung 58 auf die Luftseite des Filters erstreckt. Die Luftseite ist dabei durch den Filter 61 von der strömungsmäßigen Verbindung zwischen dem Pulvereinlass 80 der Pulverdünnstrompumpe 51 und dem Pulvereinlass 5 der Treibdüse 1 des Pulverförderinjektors 100 getrennt.

Die Pulverdünnstrompumpe 51 weist einen dem Pulverförderinjektor 100 zugeordneten Förderlufteinlass 7 auf, um Förderluft zu der Treibdüse 1 des Pulverförderinjektors 100 zuzuführen. Darüber hinaus weist die Pulverdünnstrompumpe 51 einen dem Pulverförderinjektor 100 zugeordneten Zusatzlufteinlass 27 auf, um Zusatzluft in den Strömungsweg eines Pulver-Förderluft-Gemisches am Pulverauslass 81 der Pulverdünnstrompumpe 51 zuzuführen. Obgleich in den Zeichnungen nicht dargestellt, ist es von Vorteil, wenn mindestens ein Lufteinstellelement vorgesehen ist, um eine pro Zeiteinheit dem Förderlufteinlass zugeführte Menge an Förderluft und/oder eine pro Zeiteinheit dem Zusatzlufteinlass zugeführte Menge an Zusatzluft einzustellen.

Nachfolgend werden die von der Einrichtung zur Funktionsuntersuchung realisierbaren Funktionen näher beschrieben.

Im Einzelnen ist die Einrichtung zur Funktionsuntersuchung ausgebildet, mindestens eine und vorzugsweise alle der folgenden Situationen zu erfassen:
- einen Verschleiß und/oder Verschleißgrad der Fangdüse 11;
- eine zumindest teilweise Verstopfung am Pulverauslass 81 der Pulverdünnstrompumpe 51;
- eine zumindest teilweise Verstopfung am Pulvereinlass 80 der Pulverdünnstrompumpe 51; und
- ein Fehlen von Beschichtungspulver in dem strömungsmäßig mit dem Pulvereinlass 80 der Pulverdünnstrompumpe 51 verbundenen Pulverreservoir.

Hierzu ist der Einrichtung zur Funktionsuntersuchung vorzugsweise zusätzlich zu dem mindestens einen Drucksensor noch ein Pulverrate-Istwert-Sensor zugeordnet, welcher im oder in der Nähe des Pulverförderinjektors 100 am oder im Strömungsweg des Pulver-Förderluft-Gemisches am Pulverauslass 81 der Pulverdünnstrompumpe 51 angeordnet und ausgebildet ist, einen entsprechenden Istwert einer von dem Pulverförderinjektor 100 geförderten Pulverrate zu erfassen.

Die Einrichtung zur Funktionsuntersuchung der Pulverdünnstrompumpe 51 bzw. Komponenten hiervon kann beispielsweise den Verschleiß und/oder Verschleißgrad der Fangdüse 11 des Pulverförderinjektors 100 erfassen, indem dem Pulverförderinjektor 100 über den Förderlufteinlass 7 pro Zeiteinheit eine vorab festgelegte Menge an Förderluft und über den Zusatzlufteinlass 27 dem Pulverförderinjektor 100 eine pro Zeiteinheit festgelegte Menge an Zusatzluft zugeführt wird. Anschließend wird bei dem geschlossenen Quetschventil 40 der sich am Pulvereinlass 5 der Treibdüse 1 des Pulverförderinjektors 100 einstellende Unterdruck erfasst. Je nach Abnutzungsgrad der Fangdüse 11 nimmt dieser Unterdruck ab, und zwar bei gleicher Förderluft- und Zusatzluftrate.

Vorzugsweise weist von daher die Pulverdünnstrompumpe 51 eine der Einrichtung zur Funktionsuntersuchung zugeordnete Auswerteeinrichtung auf, welche ausgebildet ist, den Istwert des Druckes mit entsprechenden vorab festgelegten oder erfassten Sollwerten des Druckes zu vergleichen. Wenn die Abweichung zwischen dem Istwert und dem Sollwert einen vorab festgelegten Wert überschreitet, gibt die Auswerteeinrichtung ein entsprechendes Signal ab, welches den Austausch der Fangdüse 11 empfiehlt.

Alternativ oder zusätzlich ist die Einrichtung zur Funktionsuntersuchung ausgebildet, in Abhängigkeit von dem erfassten Verschleißgrad der Fangdüse 11 die Förderluftrate und/oder Zusatzluftrate nachzuregeln, um den aufgrund des Abnutzungsgrades der Fangdüse 11 reduzierten Pulvervolumenstrom zu egalisieren, und zwar indem insbesondere die Förderluftrate erhöht wird. Vorzugsweise erfolgt diese Nachregelung automatisch, insbesondere wahlweise automatisch.

Die Einrichtung zur Funktionsuntersuchung ist ferner ausgebildet, eine zumindest teilweise Verstopfung am Pulverauslass 81 der Pulverdünnstrompumpe 51 zu erfassen und entsprechende Warnungen bzw. Hinweise auszugeben. Dabei liegt die Erkenntnis zugrunde, dass eine teilweise oder vollständige Verstopfung am Pulverauslass 81 der Pulverdünnstrompumpe 51 einen Rückstau bewirkt, welcher von dem Drucksensor erfassbar ist.

Da der Drucksensor insbesondere auch ausgelegt ist, einen zeitlichen Verlauf insbesondere eines statischen Druckes zu erfassen, kann mit Hilfe der Einrichtung zur Funktionsuntersuchung auch der zeitliche Verlauf des Fangdüsenverschleißes bzw. einer Verstopfung am Pulverauslass der Pulverdünnstrompumpe 51 erfasst werden.

Darüber hinaus kann mit Hilfe der Einrichtung zur Funktionsuntersuchung auch eine zumindest teilweise Verstopfung am Pulvereinlass 80 der Pulverdünnstrompumpe 51 erfasst werden. Hierzu wird zunächst bei geschlossenem Quetschventil 40 und bei einer vorab festgelegten Förderluft- und Zusatzluftrate der sich am Pulvereinlass des Pulverförderinjektors 100 einstellende Unterdruck erfasst. Über diesen Unterdruck sollte - wenn der Pulvereinlass der Pulverdünnstrompumpe 51 nicht verstopft ist - das Beschichtungspulver über den Pulvereinlass 80 der Pulverdünnstrompumpe 51 angesaugt werden. Dann wiederum nimmt der von dem Drucksensor erfassbare Druck am Pulvereinlass des Pulverförderinjektors 100 zu. Wenn jedoch die Druckzunahme bei geöffnetem Quetschventil 40 nicht erfolgt bzw. einen vorab festgelegten Wert nicht überschreitet, erkennt die Einrichtung zur Funktionsuntersuchung automatisch und insbesondere vorzugsweise automatisch eine zumindest teilweise Verstopfung am Pulvereinlass der Pulverdünnstrompumpe 51.

Wenn hingegen beim geöffneten Quetschventil 40 der Druck einen vorab festgelegten oberen Schwellwert überschreitet, ist dies auf ein Fehlen von Beschichtungspulver in dem strömungsmäßig mit dem Pulvereinlass 80 der Pulverdünnstrompumpe 51 verbundenen Pulverreservoir zurückzuführen.

Die Einrichtung zur Funktionsuntersuchung ist ferner ausgebildet, einen Pulverleitungsgegendruck zu erfassen. Hierzu wird bei geschlossenem Quetschventil 40 über die Druckluft-Einlasseinrichtung 30 pro Zeiteinheit eine vorab festgelegte Menge an Zusatzdruckluft dem in dem Pumpengehäuse ausgebildeten Pulverzufuhrkanal zugeführt. Abhängig von dem Strömungswiderstand und/oder der Länge einer strömungsmäßig mit dem Pulverauslass der Pulverdünnstrompumpe 51 verbundenen Pulverleitung ändert sich dann der von dem Drucksensor erfassbare Gegendruck. Dies wiederum erlaubt eine Aussage über die Länge der am Pulverauslass der Pulverdünnstrompumpe 51 strömungsmäßig angeschlossenen Pulverleitung bzw. eine Aussage über den Strömungswiederstand dieser Pulverleitung.

Vorzugsweise weist hierzu die Einrichtung zur Funktionsuntersuchung eine Speichereinrichtung auf, welche für unterschiedliche am Pulverauslass der Pulverdünnstrompumpe 51 strömungsmäßig angeschlossene Pulverschläuche bzw. Pulverleitungen für festgelegte Werte der pro Zeiteinheit dem Förderlufteinlass, dem Zusatzdrucklufteinlass zugeführten Menge an Förderluft bzw. Zusatzluft Soll-Werte eines statischen Druckes in dem Bereich der strömungsmäßigen Verbindung zwischen dem Pulvereinlass 80 der Pulverdünnstrompumpe 51 und dem Pulvereinlass 5 der Treibdüse 1 des Pulverförderinjektors 100 abgelegt sind. Die Auswerteeinrichtung ist dabei ausgelegt, anhand des von dem mindestens einen Drucksensor erfassten Druckwertes und unter Berücksichtigung der in der Speichereinrichtung abgelegten Soll-Werte des Druckes einen tatsächlich am Pulverauslass der Pulverdünnstrompumpe 51 strömungsmäßig angeschlossenen Pulverschlauch/Pulverleitung zu erfassen, insbesondere dessen Länge und/oder dessen Strömungswiderstand.

Erneut ist es von Vorteil, wenn die Pulverdünnstrompumpe 51 automatisch die Förderluftrate und/oder Zusatzluftrate einstellt in Abhängigkeit von der Länge der Pulverleitung bzw. dessen Strömungswiderstand.

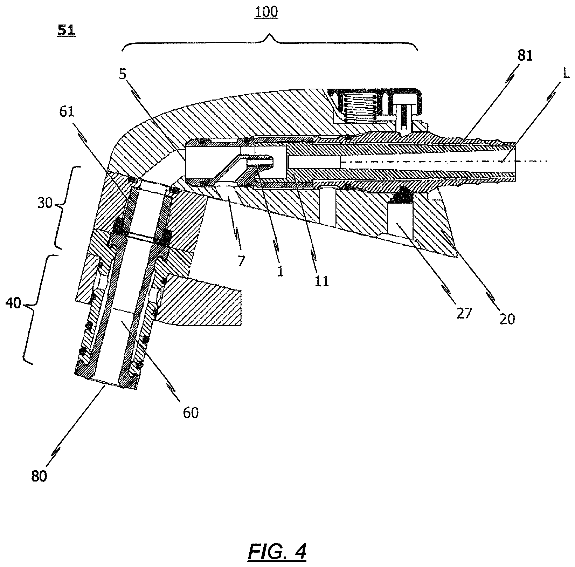

Nachfolgend wird unter Bezugnahme auf die Darstellung in FIG. 4 eine weitere exemplarische Ausführungsform einer nicht erfindungsgemäßen Pulverdünnstrompumpe 51 beschrieben.

Kurz zusammengefasst weist die weitere exemplarische Ausführungsform der Pulverdünnstrompumpe 51 einen Aufbau auf, welcher im Prinzip dem Aufbau der zuvor unter Bezugnahme auf die Darstellung in FIG. 1 beschriebenen Pulverdünnstrompumpe 51 entspricht.

Wie auch bei der unter Bezugnahme auf die Darstellung in FIG. 1 beschriebenen Ausführungsform ist die erfindungsgemäße Pulverdünnstrompumpe 51 gemäß FIG. 4 ausgebildet, um Pulver bzw. Beschichtungspulver von einem (nicht gezeigten) Pulverreservoir zu einer (ebenfalls in FIG. 1 nicht gezeigten) Pulversprühvorrichtung dient.

Die exemplarische Ausführungsform der erfindungsgemäßen Pulverdünnstrompumpe 51, wie sie schematisch in FIG. 4 gezeigt ist, zeichnet sich erneut durch einen modularen Aufbau aus und besteht im Wesentlichen aus einem Pulvereinlass-/Quetschventil-Modul 40, einem Druckluft-Einlass-Modul 30 und einem als Pumpenmodul ausgebildeten Pulverförderinjektor 100 am Pulverauslass 81 der Pulverdünnstrompumpe 51. Diese Module sind miteinander lösbar verbunden, um eine besonders kompakte Pulverdünnstrompumpe 51 auszubilden.

Wie in FIG. 4 schematisch dargestellt, weist die nicht erfindungsgemäße Pulverdünnstrompumpe 51 am Pulvereinlass-/Quetschventil-Modul 40 einen Pulvereinlass 80 auf, der mit Hilfe einer (in FIG. 4 nicht gezeigten) Pulverleitung, insbesondere mit Hilfe eines Ansaugrohres oder dergleichen, strömungsmäßig mit dem bereits erwähnten und in FIG. 4 nicht gezeigten Pulverreservoir verbunden oder verbindbar ist. Das Pulvereinlass-/Quetschventil-Modul 40 mit dem Pulvereinlass 80 sind bezüglich der Längsachse L des Pulverauslasses 81 der Pulverdünnstrompumpe 51 um etwa 60 bis 70° in Richtung des nicht gezeigten Pulverreservoirs, d.h. in FIG. 4 nach unten, abgewinkelt ausgeführt, so dass das Pulvereinlass-/Quetschventil-Modul 40 zumindest bereichsweise als Ansaugrohr dient, was das Ansprechverhalten der Pulverdünnstrompumpe 51 insgesamt verbessert.

An einem gegenüberliegenden Endbereich der Pulverdünnstrompumpe 51 ist der bereits genannte Pulverauslass 81 vorgesehen, welcher mit Hilfe einer in FIG. 4 nicht gezeigten Pulverleitung, insbesondere mit Hilfe eines Pulverschlauches, mit einem Pulvereinlass einer Pulversprühvorrichtung (insbesondere Beschichtungspistole) strömungsmäßig verbunden bzw. verbindbar ist.

Im Einzelnen sind bei der in FIG. 4 gezeigten exemplarischen Ausführungsform sowohl der Pulvereinlass 80 der Pulverdünnstrompumpe 51 als auch der Pulverauslass 81 der Pulverdünnstrompumpe 51 jeweils als Schlauchanschlussstutzen ausgebildet, an den die entsprechende Pulverleitung/der entsprechende Pulverschlauch aufsteckbar und beispielsweise mit einer Schlauchklemme fixierbar ist. Selbstverständlich kommen aber auch andere Ausführungsformen für den Pulvereinlass 80 bzw. den Pulverauslass 81 der Pulverdünnstrompumpe 51 in Frage.

Die Pulverdünnstrompumpe 51 gemäß FIG. 4 weist einen Pulverförderinjektor 100 auf, welcher nach dem Injektorprinzip oder Venturi-Rohrprinzip arbeitet. Hierzu weist die Pulverdünnstrompumpe 51 einen Pulverförderinjektor 100 auf, in welchem ein Luftstrahl in einem Unterdruckbereich, der durch eine Kanalverbreiterung gebildet wird, ein Unterdruck erzeugt wird, wobei dieser Unterdruck dazu benutzt wird, Pulver bzw. Beschichtungspulver über den Pulvereinlass 80 der Pulverdünnstrompumpe 51 aus dem Pulverreservoir abzusaugen. Das abgesaugte Pulver bzw. Beschichtungspulver wird von dem Luftstrahl mitgerissen und zur Pulversprühvorrichtung gefördert. Durch Einstellen der Durchflussrate des Luftstromes kann der Unterdruck und damit die geförderte Pulvermenge eingestellt werden.

Eine exemplarische Ausführungsform eines Pulverförderinjektors 100, welcher sich für den Einsatz in der Pulverdünnstrompumpe 51 gemäß FIG. 4 eignet ist in FIG. 2 und FIG. 3 gezeigt. Zur Vermeidung von Wiederholungen wird an dieser Stelle auf die vorherigen Ausführungen zu der exemplarischen Ausführungsform des Pulverförderinjektors 100 verwiesen.

Demnach wird im Betrieb der Pulverdünnstrompumpe 51 über den Förderlufteinlass 7 der Treibdüse 1 des Pulverförderinjektors 100 Förderluft zugeführt, welche über die Düsenöffnung der Treibdüse 1 in Richtung des Strahlfangkanals 12 ausströmt. Aufgrund der düsenförmigen Anordnung zumindest des strömungsauswertigen Bereiches des Strahlfangkanals 12 wird die Förderluft in die Fangdüse 11 gepresst und bedingt durch den verhältnismäßig kleinen Durchmesser der Düsenöffnung der Treibdüse 1 bildet sich ein Luftstrom hoher Geschwindigkeit aus, wodurch im Bereich des Pulvereinlasses des Pulverförderinjektors 100 ein Unterdruck ausgebildet wird. Durch diesen sich im Betrieb der Pulverdünnstrompumpe 51 im Pulvereinlassbereich ausbildenden Unterdruck wird Pulver bzw. Beschichtungspulver angesaugt, wenn der Pulvereinlass des als Treibdüse 1 dienenden ersten Bereiches des Pulverförderinjektors 100 über eine Pulverleitung etc. strömungsmäßig mit einem entsprechenden Pulverbehälter oder dergleichen in Verbindung steht.

Wie es der schematischen Schnittansicht gemäß FIG. 4 entnommen werden kann, ist der Pulverförderinjektor 100 in einer Aufnahme der als Pumpenmodul ausgeführten Pulverdünnstrompumpe 51 aufgenommen, so dass das Pumpenmodul im Hinblick auf den Pulverförderinjektor 100 als Gehäuse 20 bzw. Injektorgehäuse dient.

Zusätzlich zu dem zuvor beschriebenen Pulverförderinjektor 100 weist die als Pumpenmodul ausgebildete Pulverdünnstrompumpe 51 der exemplarischen Ausführungsform ein Quetschventil 40 auf, welches in einem Strömungspfad zwischen dem Pulvereinlass 80 des Pumpenmoduls und dem Pulvereinlass 5 der Treibdüse 1 des Pulverförderinjektors 100 angeordnet ist. Das Quetschventil 40 ist bei der in FIG. 4 gezeigten Ausführungsform der erfindungsgemäßen Pulverdünnstrompumpe 51 Teil des Pulvereinlass-/Quetschventil-Moduls 40.

Dieses Quetschventil 40 ist vorzugsweise von einer Steuereinrichtung der Pulverdünnstrompumpe 51 ansteuerbar, um bedarfsweise eine strömungsmäßige Verbindung zwischen dem Pulvereinlass 80 des Pumpenmoduls und dem Pulvereinlass 5 der Treibdüse 1 des Pulverförderinjektors 100 zu unterbrechen. Eine solche Unterbrechung des Strömungspfades findet - wie es nachfolgend näher beschrieben wird - vorzugsweise in einem Reinigungsbetrieb der Pulverdünnstrompumpe 51 statt.

Darüber hinaus ist es denkbar, dass zwischen dem Quetschventil 40 und dem Pulvereinlass 5 der Treibdüse 1 des Pulverförderinjektors 100 eine Druckluft-Einlasseinrichtung 30 vorgesehen ist, um bedarfsweise Druckluft dem Pulverförderinjektor 100 zuzuführen. Im Einzelnen ist bei der in FIG. 4 gezeigten exemplarischen Ausführungsform der erfindungsgemäßen Pulverdünnstrompumpe 51 vorgesehen, dass die Druckluft-Einlasseinrichtung 30 in dem Strömungspfad zwischen dem Quetschventil 40 und dem Pulvereinlass 5 der Treibdüse 1 des Pulverförderinjektors 100 angeordnet ist.

Das Pumpenmodul als solches weist einen ersten Druckluftanschluss 7 auf, über den der Treibdüse 1 des Pulverförderinjektors 100 Förderluft zuführbar ist. Darüber hinaus weist das Pumpenmodul einen zweiten Druckluftanschluss 27 auf, über den dem Pulverförderinjektor 100 Zusatzluft zuführbar ist.

Zusätzlich hierzu weist das Pumpenmodul einen dritten Druckluftanschluss auf, über den bedarfsweise der Druckluft-Einlasseinrichtung 30 Druckluft zuführbar ist, und einen vierten Druckluftanschluss auf, über den ein entsprechender Steuerdruck dem Quetschventil 40 zuführbar ist zum Betätigen des Quetschventils 40.

Die zum Betrieb der als Pumpenmodul ausgebildeten Pulverdünnstrompumpe 51 notwendigen Drücke werden von einer entsprechenden Druckluftsteuerung der Pulverdünnstrompumpe 51 bereitgestellt.

Wie dargestellt, weist das Pumpengehäuse 20 der Pulverdünnstrompumpe 51, in welchem zumindest bereichsweise der Pulverförderinjektor 100 aufgenommen ist, einen Pulverzuführkanal 60 auf, welcher den Pulvereinlass 80 der Pulverdünnstrompumpe 51 strömungsmäßig mit dem Pulvereinlass 5 der Treibdüse 1 des Pulverförderinjektors 100 verbindet. Das bereits genannte Quetschventil 40 ist dabei ausgebildet, bedarfsweise eine über den Pulverzuführkanal 60 zwischen dem Pulvereinlass 80 der Pulverdünnstrompumpe 51 und dem Pulvereinlass 5 der Treibdüse 1 des Pulverförderinjektors 100 gebildete strömungsmäßig Verbindung zu trennen.

Wie in FIG. 4 dargestellt, weist die exemplarische Ausführungsform der nicht erfindungsgemäßen Pulverdünnstrompumpe 51 ferner eine Druckluft-Einlasseinrichtung 30 auf, welche an einer Stelle in die strömungsmäßige Verbindung zwischen dem Pulvereinlass 80 der Pulverdünnstrompumpe 51 und dem Pulvereinlass 5 der Treibdüse 1 des Pulverförderinjektors 100 mündet, um bedarfsweise Zusatzdruckluft als zusätzliche Transportdruckluft oder Spülluft (in einem Reinigungsbetrieb der Pulverdünnstrompumpe 51) zuzuführen.

Im Einzelnen ist die Druckluft-Einlasseinrichtung 30 an einer Stelle zwischen dem Quetschventil 40 und dem Pulvereinlass 5 der Treibdüse 1 des Pulverförderinjektors 100 angeordnet und mündet dort in die strömungsmäßige Verbindung.

Die nicht erfindungsgemäße Pulverdünnstrompumpe 51, wie sie schematisch beispielsweise in FIG. 4 dargestellt ist, weist ferner eine Einrichtung zur Funktionsuntersuchung der Pulverdünnstrompumpe 51 oder Komponenten hiervon auf. Hierzu umfasst die Einrichtung zur Funktionsuntersuchung mindestens einen Drucksensor (in den Figuren nicht dargestellt), um einen statischen und/oder dynamischen Druck in einem Bereich in der strömungsmäßigen Verbindung zwischen dem Pulvereinlass 80 der Pulverdünnstrompumpe 51 und dem Pulvereinlass 5 der Treibdüse 1 des Pulverförderinjektors 100 zu erfassen.

Wie auch bei der in FIG. 1 gezeigten Ausführungsform der erfindungsgemäßen Pulverdünnstrompumpe 51 ist der mindestens eine Drucksensor der Einrichtung zur Funktionsuntersuchung insbesondere ausgebildet, einen statischen und/oder dynamischen Druck in einem Bereich in der strömungsmäßigen Verbindung zwischen dem Quetschventil 40 und dem Pulvereinlass 5 der Treibdüse 1 des Pulverförderinjektors 100 zu erfassen. Alternativ oder zusätzlich ist der mindestens eine Drucksensor ferner ausgebildet, über einen festlegbaren Zeitraum den zeitlichen Verlauf eines statischen und/oder dynamischen Druckes zu erfassen.

Bei der in FIG. 4 schematisch gezeigten Ausführungsform der nicht erfindungsgemäßen Pulverdünnstrompumpe 51 ist der Druckluft-Einlasseinrichtung 30 ein Filter 61 zugeordnet, welcher für Luft, aber nicht für Beschichtungspulver durchlässig ist. Der mindestens eine Drucksensor der Einrichtung zur Funktionsuntersuchung ist vorzugsweise an einen Druckluftweg angeschlossen, welcher sich von einer der Druckluft-Einlasseinrichtung 30 zugeordneten Druckluftleitung (in FIG. 4 nicht gezeigt) auf die Luftseite des Filters erstreckt. Die Luftseite ist dabei durch den Filter 61 von der strömungsmäßigen Verbindung zwischen dem Pulvereinlass 80 der Pulverdünnstrompumpe 51 und dem Pulvereinlass 5 der Treibdüse 1 des Pulverförderinjektors 100 getrennt.

Die Pulverdünnstrompumpe 51 weist einen dem Pulverförderinjektor 100 zugeordneten Förderlufteinlass 7 auf, um Förderluft zu der Treibdüse 1 des Pulverförderinjektors 100 zuzuführen. Darüber hinaus weist die Pulverdünnstrompumpe 51 einen dem Pulverförderinjektor 100 zugeordneten Zusatzlufteinlass 27 auf, um Zusatzluft in den Strömungsweg eines Pulver-Förderluft-Gemisches am Pulverauslass 81 der Pulverdünnstrompumpe 51 zuzuführen. Obgleich in den Zeichnungen nicht dargestellt, ist es von Vorteil, wenn mindestens ein Lufteinstellelement vorgesehen ist, um eine pro Zeiteinheit dem Förderlufteinlass zugeführte Menge an Förderluft und/oder eine pro Zeiteinheit dem Zusatzlufteinlass zugeführte Menge an Zusatzluft einzustellen.

Die bei der in FIG. 4 schematisch gezeigten Pulverdünnstrompumpe 51 zum Einsatz kommende Einrichtung zur Funktionsuntersuchung entspricht in funktioneller Hinsicht der Einrichtung zur Funktionsuntersuchung, welche bei der in FIG. 1 schematisch gezeigten Pulverdünnstrompumpe 51 zum Einsatz kommt.

Im Einzelnen ist die Einrichtung zur Funktionsuntersuchung somit ausgebildet, mindestens eine und vorzugsweise alle der folgenden Situationen zu erfassen:
- einen Verschleiß und/oder Verschleißgrad der Fangdüse 11;
- eine zumindest teilweise Verstopfung am Pulverauslass 81 der Pulverdünnstrompumpe 51;
- eine zumindest teilweise Verstopfung am Pulvereinlass 80 der Pulverdünnstrompumpe 51; und
- ein Fehlen von Beschichtungspulver in dem strömungsmäßig mit dem Pulvereinlass 80 der Pulverdünnstrompumpe 51 verbundenen Pulverreservoir.

Hierzu ist der Einrichtung zur Funktionsuntersuchung vorzugsweise zusätzlich zu dem mindestens einen Drucksensor noch ein Pulverrate-Istwert-Sensor zugeordnet, welcher im oder in der Nähe des Pulverförderinjektors 100 am oder im Strömungsweg des Pulver-Förderluft-Gemisches am Pulverauslass 81 der Pulverdünnstrompumpe 51 angeordnet und ausgebildet ist, einen entsprechenden Istwert einer von dem Pulverförderinjektor 100 geförderten Pulverrate zu erfassen.

Die Einrichtung zur Funktionsuntersuchung der Pulverdünnstrompumpe 51 bzw. Komponenten hiervon kann beispielsweise den Verschleiß und/oder Verschleißgrad der Fangdüse 11 des Pulverförderinjektors 100 erfassen, indem dem Pulverförderinjektor 100 über den Förderlufteinlass 7 pro Zeiteinheit eine vorab festgelegte Menge an Förderluft und über den Zusatzlufteinlass 27 dem Pulverförderinjektor 100 eine pro Zeiteinheit festgelegte Menge an Zusatzluft zugeführt wird. Anschließend wird bei dem geschlossenen Quetschventil 40 der sich am Pulvereinlass 5 der Treibdüse 1 des Pulverförderinjektors 100 einstellende Unterdruck erfasst. Je nach Abnutzungsgrad der Fangdüse 11 nimmt dieser Unterdruck ab, und zwar bei gleicher Förderluft- und Zusatzluftrate.

Vorzugsweise weist von daher die Pulverdünnstrompumpe 51 eine der Einrichtung zur Funktionsuntersuchung zugeordnete Auswerteeinrichtung auf, welche ausgebildet ist, den Istwert des Druckes mit entsprechenden vorab festgelegten oder erfassten Sollwerten des Druckes zu vergleichen. Wenn die Abweichung zwischen dem Istwert und dem Sollwert einen vorab festgelegten Wert überschreitet, gibt die Auswerteeinrichtung ein entsprechendes Signal ab, welches den Austausch der Fangdüse 11 empfiehlt.

Alternativ oder zusätzlich ist die Einrichtung zur Funktionsuntersuchung ausgebildet, in Abhängigkeit von dem erfassten Verschleißgrad der Fangdüse 11 die Förderluftrate und/oder Zusatzluftrate nachzuregeln, um den aufgrund des Abnutzungsgrades der Fangdüse 11 reduzierten Pulvervolumenstrom zu egalisieren, und zwar indem insbesondere die Förderluftrate erhöht wird. Vorzugsweise erfolgt diese Nachregelung automatisch, insbesondere wahlweise automatisch.

Die Einrichtung zur Funktionsuntersuchung ist ferner ausgebildet, eine zumindest teilweise Verstopfung am Pulverauslass 81 der Pulverdünnstrompumpe 51 zu erfassen und entsprechende Warnungen bzw. Hinweise auszugeben. Dabei liegt die Erkenntnis zugrunde, dass eine teilweise oder vollständige Verstopfung am Pulverauslass 81 der Pulverdünnstrompumpe 51 einen Rückstau bewirkt, welcher von dem Drucksensor erfassbar ist.

Da der Drucksensor insbesondere auch ausgelegt ist, einen zeitlichen Verlauf insbesondere eines statischen Druckes zu erfassen, kann mit Hilfe der Einrichtung zur Funktionsuntersuchung auch der zeitliche Verlauf des Fangdüsenverschleißes bzw. einer Verstopfung am Pulverauslass der Pulverdünnstrompumpe 51 erfasst werden.

Darüber hinaus kann mit Hilfe der Einrichtung zur Funktionsuntersuchung auch eine zumindest teilweise Verstopfung am Pulvereinlass 80 der Pulverdünnstrompumpe 51 erfasst werden. Hierzu wird zunächst bei geschlossenem Quetschventil 40 und bei einer vorab festgelegten Förderluft- und Zusatzluftrate der sich am Pulvereinlass des Pulverförderinjektors 100 einstellende Unterdruck erfasst. Über diesen Unterdruck sollte - wenn der Pulvereinlass der Pulverdünnstrompumpe 51 nicht verstopft ist - das Beschichtungspulver über den Pulvereinlass 80 der Pulverdünnstrompumpe 51 angesaugt werden. Dann wiederum nimmt der von dem Drucksensor erfassbare Druck am Pulvereinlass des Pulverförderinjektors 100 zu. Wenn jedoch die Druckzunahme bei geöffnetem Quetschventil 40 nicht erfolgt bzw. einen vorab festgelegten Wert nicht überschreitet, erkennt die Einrichtung zur Funktionsuntersuchung automatisch und insbesondere vorzugsweise automatisch eine zumindest teilweise Verstopfung am Pulvereinlass der Pulverdünnstrompumpe 51.

Wenn hingegen beim geöffneten Quetschventil 40 der Druck einen vorab festgelegten oberen Schwellwert überschreitet, ist dies auf ein Fehlen von Beschichtungspulver in dem strömungsmäßig mit dem Pulvereinlass 80 der Pulverdünnstrompumpe 51 verbundenen Pulverreservoir zurückzuführen.

Die Einrichtung zur Funktionsuntersuchung ist ferner ausgebildet, einen Pulverleitungsgegendruck zu erfassen. Hierzu wird bei geschlossenem Quetschventil 40 über die Druckluft-Einlasseinrichtung 30 pro Zeiteinheit eine vorab festgelegte Menge an Zusatzdruckluft dem in dem Pumpengehäuse ausgebildeten Pulverzufuhrkanal zugeführt. Abhängig von dem Strömungswiderstand und/oder der Länge einer strömungsmäßig mit dem Pulverauslass der Pulverdünnstrompumpe 51 verbundenen Pulverleitung ändert sich dann der von dem Drucksensor erfassbare Gegendruck. Dies wiederum erlaubt eine Aussage über die Länge der am Pulverauslass der Pulverdünnstrompumpe 51 strömungsmäßig angeschlossenen Pulverleitung bzw. eine Aussage über den Strömungswiederstand dieser Pulverleitung.

Vorzugsweise weist hierzu die Einrichtung zur Funktionsuntersuchung eine Speichereinrichtung auf, welche für unterschiedliche am Pulverauslass der Pulverdünnstrompumpe 51 strömungsmäßig angeschlossene Pulverschläuche bzw. Pulverleitungen für festgelegte Werte der pro Zeiteinheit dem Förderlufteinlass, dem Zusatzdrucklufteinlass zugeführten Menge an Förderluft bzw. Zusatzluft Soll-Werte eines statischen Druckes in dem Bereich der strömungsmäßigen Verbindung zwischen dem Pulvereinlass 80 der Pulverdünnstrompumpe 51 und dem Pulvereinlass 5 der Treibdüse 1 des Pulverförderinjektors 100 abgelegt sind. Die Auswerteeinrichtung ist dabei ausgelegt, anhand des von dem mindestens einen Drucksensor erfassten Druckwertes und unter Berücksichtigung der in der Speichereinrichtung abgelegten Soll-Werte des Druckes einen tatsächlich am Pulverauslass der Pulverdünnstrompumpe 51 strömungsmäßig angeschlossenen Pulverschlauch/Pulverleitung zu erfassen, insbesondere dessen Länge und/oder dessen Strömungswiderstand.

Erneut ist es von Vorteil, wenn die Pulverdünnstrompumpe 51 automatisch die Förderluftrate und/oder Zusatzluftrate einstellt in Abhängigkeit von der Länge der Pulverleitung bzw. dessen Strömungswiderstand.

Die Erfindung ist nicht auf die in den Zeichnungen gezeigte exemplarische Ausführungsform beschränkt, sondern wird durch die angehängten Ansprüche definiert.

## Patentansprüche

1. Pulverdünnstrompumpe (51) zum Fördern von Pulver, insbesondere Beschichtungspulver von einem Pulverreservoir zu einer Pulversprühvorrichtung, wobei die Pulverdünnstrompumpe (51) einen modularen Aufbau aufweist und folgendes aufweist:
- ein Pulvereinlass-Modul (80) an einem Pulvereinlass (80) der Pulverdünnstrompumpe (51), welcher strömungsmäßig mit dem Pulverreservoir verbindbar ist,
- eine als Quetschventil-Modul (40) ausgebildete Ventileinrichtung,
- ein Druckluft-Einlass-Modul (30), und
- einen als Pumpenmodul ausgebildeten Pulverförderinjektor (100) mit einer Treibdüse (1) und einer Fangdüse (11) an einem Pulverauslass (81) der Pulverdünnstrompumpe (51),
wobei der Pulverauslass (81) strömungsmäßig mit der Pulversprühvorrichtung verbindbar ist,
wobei das Pulvereinlass-Modul (80), das Quetschventil-Modul (40), das Druckluft-Einlass-Modul (30) und der als Pumpenmodul ausgebildete Pulverförderinjektor (100) miteinander lösbar verbunden sind, wobei das Druckluft-Einlass-Modul (30) zwischen dem als Pumpenmodul ausgebildeten Pulverförderinjektor (100) und dem Quetschventil-Modul (40) angeordnet ist,
wobei die als Quetschventil-Modul (40) ausgebildete Ventileinrichtung ausgebildet ist zum wahlweisen Unterbrechen einer strömungsmäßigen Verbindung zwischen dem Pulvereinlass (80) der Pulverdünnstrompumpe (51) und einem Pulvereinlass (5) der Treibdüse (1),
wobei ferner eine Einrichtung zur Funktionsuntersuchung der Pulverdünnstrompumpe (51) oder Komponenten der Pulverdünnstrompumpe (51) vorgesehen ist, wobei die Einrichtung zur Funktionsuntersuchung mindestens einen Drucksensor aufweist zum Erfassen eines statischen und/oder dynamischen Druckes in einem Bereich in der strömungsmäßigen Verbindung zwischen dem Pulvereinlass (80) der Pulverdünnstrompumpe (51) und dem Pulvereinlass (5) der Treibdüse (1).

2. Pulverdünnstrompumpe (51) nach Anspruch 1,
wobei die Ventileinrichtung ein pneumatisch betätigbares Quetschventil (40) aufweist, welches in dem Strömungspfad zwischen dem Pulvereinlass (80) der Pulverdünnstrompumpe (51) und dem Pulvereinlass (5) der Treibdüse (1) vorgesehen ist.

3. Pulverdünnstrompumpe (51) nach Anspruch 1 oder 2,
wobei die Fangdüse (11) einen Strahlfangkanal (12) aufweist, welcher der Treibdüse (1) mit Abstand axial gegenüberliegt, und wobei der Pulvereinlass (5) der Treibdüse (1) dem Strahlfangkanal (12) mit Abstand axial gegenüberliegt.

4. Pulverdünnstrompumpe (51) nach einem der Ansprüche 1 bis 3,
wobei der Pulvereinlass (5) der Treibdüse (1) bezüglich einer Achse ausgerichtet ist, die mit einer von dem Strahlfangkanal (12) definierten Längsachse (L) übereinstimmt oder parallel zu einer von dem Strahlfangkanal (12) definierten Längsachse (L) verläuft.

5. Pulverdünnstrompumpe (51) nach einem der Ansprüche 1 bis 4,
wobei ein Pumpengehäuse (20) vorgesehen ist, in welchem zumindest bereichsweise der Pulverförderinjektor (100) aufgenommen ist, wobei in dem Pumpengehäuse (20) ein Pulverzuführkanal (60) ausgebildet ist, welcher den Pulvereinlass (80) der Pulverdünnstrompumpe (51) strömungsmäßig mit dem Pulvereinlass (5) der Treibdüse (1) verbindet, wobei die Ventileinrichtung ausgebildet ist, bedarfsweise eine über den Pulverzuführkanal (60) zwischen dem Pulvereinlass (80) der Pulverdünnstrompumpe (51) und dem Pulvereinlass (5) der Treibdüse (1) gebildete strömungsmäßige Verbindung zu trennen.

6. Pulverdünnstrompumpe (51) nach Anspruch 5,
wobei der Pulverzuführkanal (60) geradlinig entlang einer Längsachse (L) verläuft, wobei die Längsachse (L) des Pulverzuführkanals mit einer von dem Strahlfangkanal (12) definierten Längsachse (L) übereinstimmt oder parallel zu einer von dem Strahlfangkanal (12) definierten Längsachse (L) verläuft.

7. Pulverdünnstrompumpe (51) nach einem der Ansprüche 1 bis 6,
welche ferner eine Druckluft-Einlasseinrichtung (30) aufweist, welche an mindestens einer Stelle in die strömungsmäßige Verbindung zwischen dem Pulvereinlass (80) der Pulverdünnstrompumpe (51) und dem Pulvereinlass (5) der Treibdüse (1) mündet zum bedarfsweisen Zuführen von Druckluft als zusätzliche Transportdruckluft und/oder als Spülluft.

8. Pulverdünnstrompumpe (51) nach Anspruch 7,
wobei die Druckluft-Einlasseinrichtung (30) an einer Stelle zwischen der Ventileinrichtung und dem Pulvereinlass (5) der Treibdüse (1) in die strömungsmäßige Verbindung mündet.

9. Pulverdünnstrompumpe (51) nach einem der Ansprüche 1 bis 8,
wobei der mindestens eine Drucksensor ausgebildet ist, über einen festlegbaren Zeitraum den zeitlichen Verlauf eines statischen und/oder dynamischen Druckes zu erfassen.

10. Pulverdünnstrompumpe (51) nach einem der Ansprüche 1 bis 9 in Kombination mit Anspruch 7 oder 8, wobei der Druckluft-Einlasseinrichtung (30) ein Filter (61) zugeordnet ist, welcher für Luft, aber nicht für Pulver, insbesondere Beschichtungspulver durchlässig ist, wobei der mindestens eine Drucksensor an einen Druckluftweg angeschlossen ist, welcher sich von einer der Druckluft-Einlasseinrichtung (30) zugeordneten Druckluftleitung (58) auf die Luftseite des Filters (61) erstreckt, wobei die Luftseite durch den Filter (61) von der strömungsmäßigen Verbindung zwischen dem Pulvereinlass (80) der Pulverdünnstrompumpe (51) und dem Pulvereinlass (5) der Treibdüse (1) getrennt ist.

11. Pulverdünnstrompumpe (51) nach einem der Ansprüche 1 bis 10,
wobei die Einrichtung zur Funktionsuntersuchung mindestens einen Pulverrate-Istwert-Sensor aufweist, welcher im oder in der Nähe des Pulverförderinjektors (100) am oder im Strömungsweg des Pulver-Förderluft-Gemisches am Pulverauslass (81) der Pulverdünnstrompumpe (51) angeordnet ist zum Erfassen eines entsprechenden Istwertes einer von dem Pulverförderinjektor (100) geförderten Pulverrate.

12. Pulverdünnstrompumpe (51) nach einem der Ansprüche 1 bis 11,
wobei die Pulverdünnstrompumpe (51) einen dem Pulverförderinjektor (100) zugeordneten Förderlufteinlass (7) aufweist zum Zuführen von Förderluft zu der Treibdüse (1), und einen dem Pulverförderinjektor (100) zugeordneten Zusatzlufteinlass (27) aufweist zum Zuführen von Zusatzluft in den Strömungsweg eines Pulver-Förderluft-Gemisches am Pulverauslass (81) der Pulverdünnstrompumpe (51), wobei mindestens ein Lufteinstellelement vorgesehen ist zum Einstellen einer pro Zeiteinheit dem Förderlufteinlass (7) zugeführten Menge an Förderluft und/oder zum Einstellen einer pro Zeiteinheit dem Zusatzlufteinlass (27) zugeführten Menge an Zusatzluft.

13. Pulverdünnstrompumpe (51) nach Anspruch 12,
wobei die Einrichtung zur Funktionsuntersuchung eine Auswerteeinrichtung aufweist zum Auswerten eines von dem mindestens einen Drucksensor erfassten statischen und/oder dynamischen Druckwertes und/oder zum Auswerten eines von dem mindestens einen Drucksensor erfassten zeitlichen Verlaufes eines statischen und/oder dynamischen Druckes, wobei die Auswerteeinrichtung ausgebildet ist, anhand des von dem mindestens einen Drucksensor erfassten Druckwertes und/oder des von dem mindestens einen Drucksensor erfassten Druckverlaufes sowie anhand der pro Zeiteinheit dem Förderlufteinlass und/oder dem Zusatzlufteinlass zugeführten Menge an Förderluft bzw. Zusatzluft mindestens eine und vorzugsweise alle folgenden Situationen zu erfassen:
- einen Verschleiß und/oder Verschleißgrad der Fangdüse (11);
- eine zumindest teilweise Verstopfung am Pulverauslass (81) der Dünnstrompumpe;
- eine zumindest teilweise Verstopfung am Pulvereinlass (80) der Dünnstrompumpe; und
- ein Fehlen von Pulver, insbesondere Beschichtungspulver in dem strömungsmäßig mit dem Pulvereinlass (80) der Dünnstrompumpe verbundenen Pulverreservoir.

14. Pulverdünnstrompumpe (51) nach einem der Ansprüche 1 bis 13,
wobei die Einrichtung zur Funktionsuntersuchung eine Speichereinrichtung aufweist, in welcher für unterschiedliche am Pulverauslass (81) der Pulverdünnstrompumpe (51) strömungsmäßig angeschlossene Pulverschläuche für festgelegte Werte der pro Zeiteinheit dem Förderlufteinlass und/oder dem Zusatzlufteinlass zugeführten Menge an Förderluft bzw. Zusatzluft Soll-Werte eines statischen Druckes in einen Bereich in der strömungsmäßigen Verbindung zwischen dem Pulvereinlass (80) der Pulverdünnstrompumpe (51) und dem Pulvereinlass (5) der Treibdüse (1) abgelegt sind, und wobei die Auswerteeinrichtung ausgelegt ist, anhand des von dem mindestens einen Drucksensor erfassten Druckwertes und/oder des von dem mindestens einen Drucksensor erfassten Druckverlaufes und unter Berücksichtigung der in der Speichereinrichtung abgelegten Soll-Werte des Druckes einen tatsächlich am Pulverauslass (81) der Pulverdünnstrompumpe (51) strömungsmäßig angeschlossenen Pulverschlauch zu erfassen, insbesondere dessen Länge und/oder dessen Strömungswiderstand.

## Claims

1. A dilute phase powder pump (51) for conveying powder, in particular coating powder, from a powder reservoir to a powder spraying device, wherein the dilute phase powder pump (51) has a modular structure and comprises the following:
- a powder inlet module (80) at a powder inlet (80) of the dilute phase powder pump (51), which is fluidly connectable to the powder reservoir,
- a valve device in the form of a pinch valve module (40),
- a compressed air inlet module (30), and
- a powder-conveying injector (100) in the form of a pump module, having a drive nozzle (1) and a collecting nozzle (11) at a powder outlet (81) of the dilute phase powder pump (51),
the powder outlet (81) being fluidly connectable to the powder spraying device,
wherein the powder inlet module (80), the pinch valve module (40), the compressed air inlet module (30) and the powder-conveying injector (100) formed as a pump module are releasably connected to one another, wherein the compressed air inlet module (30) is arranged between the powder-conveying injector (100) configured as a pump module and the pinch valve module (40),
wherein the valve device formed as a pinch valve module (40) is designed to selectively disconnect a fluidic connection between the powder inlet (80) of the dilute phase powder pump (51) and a powder inlet (5) of the drive nozzle (1),
wherein further a device for the functional testing of the dilute phase powder pump (51) or components of the dilute phase powder pump (51) is provided, wherein the device for functional testing comprises at least one pressure sensor for detecting a static and/or dynamic pressure in an area in the fluidic connection between the powder inlet (80) of the dilute phase powder pump (51) and the powder inlet (5) of the drive nozzle (1).

2. The dilute phase powder pump (51) according to claim 1,
wherein the valve device comprises a pneumatically actuatable pinch valve (40) provided in the flow path between the powder inlet (80) of the dilute phase powder pump (51) and the powder inlet (5) of the drive nozzle (1).

3. The dilute phase powder pump (51) according to claim 1 or 2,
wherein the collecting nozzle (11) comprises a stream collecting channel (12) distanced axially opposite from the drive nozzle (1), and wherein the powder inlet (5) of the drive nozzle (1) is distanced axially opposite from the stream collecting channel (12).

4. The dilute phase powder pump (51) according to one of claims 1 to 3,
wherein the powder inlet (5) of the drive nozzle (1) is aligned with respect to an axis which coincides with a longitudinal axis (L) defined by the stream collecting channel (12) or runs parallel to a longitudinal axis (L) defined by the stream collecting channel (12).

5. The dilute phase powder pump (51) according to one of claims 1 to 4,
wherein a pump housing (20) is provided in which the powder-conveying injector (100) is at least partially accommodated, wherein a powder supply channel (60) is formed in the pump housing (20), which fluidly connects the powder inlet (80) of the dilute phase powder pump (51) to the powder inlet (5) of the drive nozzle (1), wherein the valve device is designed to disconnect, as required, a fluidic connection formed by the powder supply channel (60) between the powder inlet (80) of the dilute phase powder pump (51) and the powder inlet (5) of the drive nozzle (1).

6. The dilute phase powder pump (51) according to claim 5,
wherein the powder supply channel (60) runs in a straight line along a longitudinal axis (L), wherein the longitudinal axis (L) of the powder supply channel coincides with a longitudinal axis (L) defined by the stream collecting channel (12) or runs parallel to a longitudinal axis (L) defined by the stream collecting channel (12).

7. The dilute phase powder pump (51) according to one of claims 1 to 6, which further comprises a compressed air inlet device (30) which opens into the fluidic connection at at least one point between the powder inlet (80) of the dilute phase powder pump (51) and the powder inlet (5) of the drive nozzle (1) in order to supply compressed air as additional compressed conveying air and/or as purge air as required.

8. The dilute phase powder pump (51) according to claim 7,
wherein the compressed air inlet device (30) opens into the fluidic connection at a point between the valve device and the powder inlet (5) of the drive nozzle (1).

9. The dilute phase powder pump (51) according to one of claims 1 to 8,
wherein the at least one pressure sensor is designed to detect the chronological progression of a static and/or dynamic pressure over a definable period of time.

10. The dilute phase powder pump (51) according to one of claims 1 to 9 in combination with claim 7 or 8, wherein a filter (61) permeable to air but not to powder, in particular coating powder, is allocated to the compressed air inlet device (30), wherein the at least one pressure sensor is connected to a compressed air path which extends from a compressed air line (58) allocated to the compressed air inlet device (30) to the air side of the filter (61), wherein the filter (61) separates the air side from the fluidic connection between the powder inlet (80) of the dilute phase powder pump (51) and the powder inlet (5) of the drive nozzle (1).

11. The dilute phase powder pump (51) according to one of claims 1 to 10,
wherein the device for functional testing comprises at least one actual powder rate value sensor which is arranged in or near the powder-conveying injector (100) on or in the flow path of the powder-conveying air mixture at the powder outlet (81) of the dilute phase powder pump (51) for detecting a corresponding actual powder rate value delivered by the powder-conveying injector (100).

12. The dilute phase powder pump (51) according to any one of claims 1 to 11,
wherein the dilute phase powder pump (51) comprises a conveying air inlet (7) allocated to the powder conveying injector (100) for supplying conveying air to the drive nozzle (1) and a supplementary air inlet (27) allocated to the powder-conveying injector (100) for supplying supplementary air into the flow path of a powder-conveying air mixture at the powder outlet (81) of the dilute phase powder pump (51), wherein at least one air setting element is provided for setting a volume of conveying air supplied to the conveying air inlet (7) per unit of time and/or for setting a volume of supplementary air supplied per unit of time to the supplementary air inlet (27).

13. The dilute phase powder pump (51) according to claim 12,
wherein the device for functional testing comprises an evaluation device for evaluating a static and/or dynamic pressure value detected by the at least one pressure sensor and/or for evaluating a chronological progression of a static and/or dynamic pressure detected by the at least one pressure sensor, wherein the evaluation device is designed to detect at least one and preferably all of the following situations on the basis of the pressure value detected by the at least one pressure sensor and/or the progression of pressure detected by the at least one pressure sensor as well as on the basis of the volume of conveying air or supplementary air respectively supplied to the conveying air inlet and/or the supplementary air inlet per unit of time:
- wear and/or degree of wear of the collecting nozzle (11);
- an at least partial blockage at the powder outlet (81) of the dilute phase powder pump;
- an at least partial blockage at the powder inlet (80) of the dilute phase powder pump; and
- a deficiency of powder, particularly coating powder, in the powder reservoir fluidly connected to the powder inlet (80) of the dilute phase powder pump.

14. The dilute phase powder pump (51) according to one of claims 1 to 13, wherein the device for functional testing comprises a storage device in which is stored target values of a static pressure in an area of the fluidic connection between the powder inlet (80) of the dilute phase powder pump (51) and the powder inlet (5) of the drive nozzle (1) for different powder hoses fluidly connected to the powder outlet (81) of the dilute phase powder pump (51) for defined values of the volume of conveying air or respectively supplementary air supplied to the conveying air inlet and/or supplementary compressed air inlet per unit of time, and wherein the evaluation device is designed to detect the pressure of a powder hose actually connected fluidly at the powder outlet (81) of the dilute phase powder pump (51), in particular its length and/or its flow resistance, on the basis of the pressure value detected by the at least one pressure sensor and/or the progression of the pressure detected by the at least one pressure sensor and in consideration of the target values stored in the storage device.

## Revendications

1. Pompe de flux de poudre en phase diluée (51) destiné à transporter une poudre, en particulier une poudre pour revêtement, depuis un réservoir à poudre jusqu'à un dispositif de pulvérisation de poudre, dans laquelle la pompe de flux de poudre en phase diluée (51) présente une conception modulaire et présente les éléments suivants :
- un module d'entrée de poudre (80) au niveau d'une entrée de poudre (80) de la pompe de flux de poudre en phase diluée (51), qui peut être connecté en communication fluidique au réservoir à poudre,
- un moyen de vanne réalisé sous forme de module de vanne à écrasement (40),
- un module d'entrée d'air comprimé (30), et
- un injecteur de transport de poudre (100) réalisé sous forme de module de pompe, avec une buse propulsive (1) et une buse collectrice (11) au niveau d'une sortie de poudre (81) de la pompe de flux de poudre en phase diluée (51),
dans laquelle la sortie de poudre (81) peut être connectée en communication fluidique au dispositif de pulvérisation de poudre,
dans laquelle le module d'entrée de poudre (80), le module de vanne à écrasement (40), le module d'entrée d'air comprimé (30) et l'injecteur de transport de poudre (100) réalisé sous forme de module de pompe sont connectés les uns aux autres de manière détachable,
dans laquelle le module d'entrée d'air comprimé (30) est agencé entre l'injecteur de transport de poudre (100) réalisé sous forme de module de pompe et le module de vanne à écrasement (40),
dans laquelle le moyen de vanne réalisé sous forme de module à vanne d'écrasement (40) est réalisé pour interrompre si nécessaire une connexion en communication fluidique entre l'entrée de poudre (80) de la pompe de flux de poudre en phase diluée (51) et une entrée de poudre (5) de la buse propulsive (1),
dans laquelle il est prévu en outre un moyen d'inspection de fonctionnement de la pompe de flux de poudre en phase diluée (51) ou de composants de la pompe de flux de poudre en phase diluée (51), le moyen d'inspection de fonctionnement présentant au moins un capteur de pression destiné à détecter une pression statique et/ou dynamique dans une zone dans la connexion en communication fluidique entre l'entrée de poudre (80) de la pompe de flux de poudre en phase diluée (51) et l'entrée de poudre (5) de la buse propulsive (1).

2. Pompe de flux de poudre en phase diluée (51) selon la revendication 1,
dans laquelle le moyen de vanne présente une vanne à écrasement (40) à actionnement pneumatique, qui est prévue dans le trajet d'écoulement entre l'entrée de poudre (80) de la pompe de flux de poudre en phase diluée (51) et l'entrée de poudre (5) de la buse propulsive (1).

3. Pompe de flux de poudre en phase diluée (51) selon la revendication 1 ou 2,
dans laquelle la buse collectrice (11) présente un canal collecteur de jet (12) qui se trouve à distance et axialement à l'opposé de la buse propulsive (1), et dans laquelle l'entrée de poudre (5) de la buse propulsive (1) se trouve à distance et axialement à l'opposé du canal collecteur de jet (12).

4. Pompe de flux de poudre en phase diluée (51) selon l'une quelconque des revendications 1 à 3,
dans laquelle l'entrée de poudre (5) de la buse propulsive (1) est orientée par rapport à un axe qui coïncide avec un axe longitudinal (L) défini par le canal collecteur de jet (12) ou qui s'étend parallèlement à un axe longitudinal (L) défini par le canal collecteur de jet (12).

5. Pompe de flux de poudre en phase diluée (51) selon l'une quelconque des revendications 1 à 4,
dans laquelle il est prévu un boîtier de pompe (20) dans lequel l'injecteur de transport de poudre (100) est reçu au moins en partie, dans laquelle, dans le boîtier de pompe (20), un canal d'alimentation de poudre (60) est réalisé qui connecte en communication fluidique l'entrée de poudre (80) de la pompe de flux de poudre en phase diluée (51) à l'entrée de poudre (5) de la buse propulsive (1), dans laquelle le moyen de vanne est réalisé pour couper si nécessaire une connexion en communication fluidique formée via le canal d'alimentation de poudre (60) entre l'entrée de poudre (80) de la pompe de flux de poudre en phase diluée (51) et l'entrée de poudre (5) de la buse propulsive (1).

6. Pompe de flux de poudre en phase diluée (51) selon la revendication 5,
dans laquelle le canal d'alimentation de poudre (60) s'étend de manière rectiligne le long d'un axe longitudinal (L), dans laquelle l'axe longitudinal (L) du canal d'alimentation de poudre coïncide avec un axe longitudinal (L) défini par le canal collecteur de jet (12) ou s'étend parallèlement à un axe longitudinal (L) défini par le canal collecteur de jet (12).

7. Pompe de flux de poudre en phase diluée (51) selon l'une quelconque des revendications 1 à 6,
qui présente en outre un moyen d'entrée d'air comprimé (30) qui débouche au moins à un endroit dans la connexion en communication fluidique entre l'entrée de poudre (80) de la pompe de flux de poudre en phase diluée (51) et l'entrée de poudre (5) de la buse propulsive (1) pour alimenter si nécessaire de l'air comprimé sous forme d'air comprimé de transport supplémentaire et/ou sous forme d'air de purge.

8. Pompe de flux de poudre en phase diluée (51) selon la revendication 7,
dans laquelle le moyen d'entrée d'air comprimé (30) débouche à un endroit dans la connexion en communication fluidique entre le moyen de vanne et l'entrée de poudre (5) de la buse propulsive (1).

9. Pompe de flux de poudre en phase diluée (51) selon l'une quelconque des revendications 1 à 8,
dans laquelle ledit au moins un capteur de pression est réalisé pour détecter, sur une période à déterminer, l'évolution dans le temps d'une pression statique et/ou dynamique.

10. Pompe de flux de poudre en phase diluée (51) selon l'une quelconque des revendications 1 à 9, en combinaison avec la revendication 7 ou 8, dans laquelle il est associé au moyen d'entrée d'air comprimé (30) un filtre (61) qui est perméable à l'air, mais pas à la poudre, en particulier à la poudre pour revêtement, dans laquelle ledit au moins un capteur de pression est raccordé à un trajet d'air comprimé qui s'étend depuis une conduite à air comprimé associée au moyen d'entrée d'air comprimé (30) sur le côté air du filtre (61), le côté air étant séparé par le filtre (61) de la connexion en communication fluidique entre l'entrée de poudre (80) de la pompe de flux de poudre en phase diluée (51) et l'entrée de poudre (5) de la buse propulsive (1).

11. Pompe de flux de poudre en phase diluée (51) selon l'une quelconque des revendications 1 à 10,
dans laquelle le moyen d'inspection de fonctionnement présente au moins un capteur de valeur réelle de taux de poudre, qui est agencé dans ou à proximité de l'injecteur de transport de poudre (100) au niveau de ou dans le trajet d'écoulement du mélange poudre/air de transport au niveau de la sortie de poudre (81) de la pompe de flux de poudre en phase diluée (51), pour détecter une valeur réelle correspondante d'un taux de poudre transporté par l'injecteur de transport de poudre (100).

12. Pompe de flux de poudre en phase diluée (51) selon l'une quelconque des revendications 1 à 11,
dans laquelle la pompe de flux de poudre en phase diluée (51) présente une entrée d'air de transport (7) associée à l'injecteur de transport de poudre (100) pour alimenter de l'air de transport à la buse propulsive (1), et une entrée d'air supplémentaire (27) associée à l'injecteur de transport de poudre (100) pour alimenter de l'air supplémentaire dans le trajet d'écoulement d'un mélange poudre/air de transport au niveau de la sortie de poudre (81) de la pompe de flux de poudre en phase diluée (51), dans laquelle il est prévu au moins un élément de réglage d'air pour régler une quantité d'air de transport alimentée à l'entrée d'air de transport (7) par unité de temps et/ou pour régler une quantité d'air supplémentaire alimentée à l'entrée d'air supplémentaire (27) par unité de temps.

13. Pompe de flux de poudre en phase diluée (51) selon la revendication 12, dans laquelle le moyen d'inspection de fonctionnement présente un moyen d'analyse pour analyser une valeur de pression statique et/ou dynamique détectée par ledit au moins un capteur de pression et/ou pour analyser une évolution dans le temps d'une pression statique et/ou dynamique détectée par ledit au moins un capteur de pression, dans laquelle le moyen d'analyse est réalisé pour détecter, à l'aide de la valeur de pression détectée par ledit au moins un capteur de pression et/ou de l'évolution de pression détectée par ledit au moins un capteur de pression, et à l'aide de la quantité d'air de transport ou d'air supplémentaire alimentée à l'entrée d'air de transport et/ou à l'entrée d'air supplémentaire par unité de temps, au moins une et de préférence la totalité des situations suivantes :
- une usure et/ou un degré d'usure de la buse collectrice (11) ;
- une obturation au moins partielle au niveau de la sortie de poudre (81) de la pompe de flux de poudre en phase diluée ;
- une obturation au moins partielle au niveau de l'entrée de poudre (80) de la pompe de flux de poudre en phase diluée ; et
- un manque de poudre, en particulier de poudre pour revêtement, dans le réservoir à poudre connecté en communication fluidique à l'entrée de poudre (80) de la pompe de flux de poudre en phase diluée.

14. Pompe de flux de poudre en phase diluée (51) selon l'une quelconque des revendications 1 à 13,
dans laquelle le moyen d'inspection de fonctionnement présente un moyen de sauvegarde dans lequel, pour différents tuyaux à poudre raccordés en communication fluidique au niveau de la sortie de poudre (81) de la pompe de flux de poudre en phase diluée (51) pour des valeurs déterminées de la quantité d'air de transport ou d'air supplémentaire alimentée à l'entrée d'air de transport et/ou l'entrée d'air supplémentaire par unité de temps, des valeurs de consigne d'une pression statique dans une zone dans la connexion en communication fluidique entre l'entrée de poudre (80) de la pompe de flux de poudre en phase diluée (51) et l'entrée de poudre (5) de la buse propulsive (1) sont enregistrées, et dans laquelle le moyen d'analyse est conçu pour détecter, à l'aide de la valeur de pression détectée par ledit au moins un capteur de pression et/ou de l'évolution de pression détectée par ledit au moins un capteur de pression, et en tenant compte des valeurs de consigne de la pression, enregistrées dans le moyen de sauvegarde, un tuyau à poudre effectivement raccordé en communication fluidique au niveau de la sortie de poudre (81) de la pompe de flux de poudre en phase diluée (51), en particulier la longueur de celui-ci et/ou la résistance à l'écoulement de celui-ci.
